# EUROPEAN PATENT SPECIFICATION

(11) **EP 3 120 057 B1**
(45) Date of publication and mention of the grant of the patent: **06.05.2020**
(21) Application number: 15713663.1
(22) Date of filing: 17.03.2015
(51) Int. Cl.: F16K 17/196, F16K 27/00

(54) **VALVE BODY AND VALVE COMPRISING THE SAME**
VENTILKÖRPER UND VENTIL DAMIT
CORPS DE VANNE ET VANNE COMPRENANT CELUI-CI

(30) Priority: 18.03.2014 IT MI20140446
(43) Date of publication of application: 25.01.2017
(73) Proprietor: F.N.C. - Fabbrica Nazionale Cilindri S.p.A., 20121 Milano (IT)
(72) Inventor: LA MONTAGNA, Federico, I-20121 Milano (IT)
(74) Representative: Maccalli, Marco
(86) International application number: PCT/EP2015/055547
(87) International publication number: WO 2015/140162

(56) References cited:
- AT-B- 387 636
- DE-A1-102005 050 503
- US-A- 3 454 040
- US-A1- 2008 087 331
- US-A1- 2012 181 785

## Description

### Background of the Invention

### Field of the Invention

The present invention relates to safety devices for containers of fluids (e.g., tanks) used in the fields of petrochemical, chemical, pharmaceutical industries. In particular, the present invention relates to safety valves for said tanks.

### Overview of the Related Art

In various sectors of industry, such as for example the petrochemical, chemical, pharmaceutical sectors, tanks are used to store fluids such as liquid hydrocarbons and gas. The pressure inside the tanks is usually maintained within a range of allowed pressure values for safety reasons. For example, the pressure inside the tank can be limited to avoid deformations of the structure of the tank itself.

To ensure the control of the pressure within the tanks, safety valves are exploited.

A generic safety valve may be configured to automatically open when the pressure inside the tank, to which is coupled, exceeds a predetermined maximum value - in this case the valve is referred to as "pressure relief valve" -, or when the pressure inside of the tank falls below a predetermined minimum value - in this case the valve is referred to as "vacuum relief valve" - or in both the above cases - in this case the valve is referred to as "breather valve". The valves may be configured to vent and/or suck air in and/or from the external environment, or they may be connected to a pipe for expelling excess fluid and/or sucking an inert gas to/from the pipe (as needed).

The safety valve comprises a valve body within which one or more shutters are housed, each of which is configured to switch from a closed position, in which it blocks a respective opening of the valve body, to an open position, in which it frees the opening of the valve body, allowing ejection or suction of air, inert gas or fluid, as appropriate. Generally, the shutter comprises a closing element (for example a plate) that locks the respective opening of the valve body (for example, remaining in the closed position thanks to weight force, i.e. due to the action of the gravity force), i.e. the plate stands above the respective opening of the valve body closing it completely. The shutter configured to react to an over-pressure of the fluid in the tank switches from the closed position to the open position under the effect of the internal pressure of the tank, which by exceeding the maximum predetermined pressure, exerts a force on the shutter such as to overcome a closing force (the weight force of the shutter), which keeps the shutter in the closed position and remains in this position until the tank pressure reduces to a pressure value that is no longer able to maintain the shutter in the open position (in other words, the pressure inside the tank exerts on the shutter agent a force weaker than the weight force). In the case of a shutter configured to react to an under-pressure (i.e., vacuum) of the fluid in the tank, the shutter switches from the closed position to the open position when the fluid pressure in the tank falls below the predetermined minimum value, for which a pressure difference between the pressure external to the tank and the pressure inside the tank is such that a force exerted on the shutter by the pressure external to the tank is able to overcome a closing force (the weight force of the shutter) that keeps the shutter in the closing position. The shutter remains in this position until the tank pressure has not risen to a pressure value that brings the pressure difference between the pressure external to the tank and the pressure inside the tank no longer able to keep the shutter in the open position (in other words, the pressure external to the tank exerts a force weaker than the weight force acting on the shutter).

These safety valves are usually sized in function of operating requirements (in other words, they are based on specifications of a desired application of the safety valves), selecting the body within a limited family of nominal sizes (typically DN50, DN80, DN100, DN150, DN200, DN250 and DN300). The internal parts (for example, a shutter) are then customized in order to obtain the opening at the desired pressures. This requires the replacement of the customized components in case the safety valves has to be repaired. Moreover, in case replacement of a safety valve with one of another type is required (for example, it is desired to replace a pressure relief safety valve with a vacuum or breather safety valve), a provision of a new customized safety valve and the removal of the old safety valve for mounting the new one are required.

This turns out to be disadvantageous and uneconomic from the point of view of manufacturing and of components stock management for the manufacturing company. A conventional safety valve for tanks is known from US3454040A1.

### Summary of the Invention

The Applicant has therefore devised a solution to ensure the availability of a configurable safety valve, capable of allowing a quick replacement of its components and, at the same time, such as to be simply modify its configuration as needed.

In general terms, the solution according to one or more embodiments of the present invention is based on the idea of providing a safety valve with a valve body having a structure that lends itself, through association with other valve elements and possibly also with other identical valve bodies, to the provision of a multiplicity of configurations of safety valves, of different type and easily adaptable to the needs of any implementation.

In particular, one or more aspects of the solution according to specific embodiments of the invention are indicated in the independent claims, with advantageous features of the same solution that are indicated in the dependent claims.

More specifically, an aspect of the solution according to an embodiment of the invention provides a safety valve for adjusting a pressure in a fluid tank. The valve body of the safety valve defines an internal cavity of the valve body. The valve body comprises a plurality of openings provided in the valve body to allow access to the internal cavity of the valve body. At least two openings of said plurality of openings are provided on the valve body so as to lie on planes which are substantially parallel. Furthermore, the valve body comprises a plurality of portions of the mechanical coupling. Each portion of the mechanical coupling is provided in correspondence with a respective one of said at least two openings of the valve body. Furthermore, each portion of the mechanical coupling is adapted to mate with a corresponding coupling portion of a further valve body.

According to the present invention, the valve body has a box-like structure generally prism-shaped with a quadrangular base. Moreover, the at least two openings comprise four openings provided on four of the six faces of the prism with a quadrangular base.

In one embodiment of the present invention, the at least two openings are substantially coaxial one with the other.

In one embodiment of the present invention, the plurality of coupling elements comprises a plurality of holes, through holes, threaded holes and/or threaded through holes.

According to the invention, each mechanical coupling portion comprises a respective border adapted to delimit a corresponding opening of said at least two openings, each border comprising a plurality of coupling elements for coupling with a corresponding plurality of coupling elements comprised in a corresponding border of the further valve body.

A further aspect of the solution according to an embodiment of the invention provides a corresponding safety valve comprising at least one valve body.

More specifically, A safety valve adapted to be coupled to a tank of fluid to adjust a pressure in the tank is proposed. The safety valve comprises a coupling portion for fluidly coupling the valve with the tank of fluid, and at least one pressure relief valve portion adapted to reduce an over-pressure in the tank when the pressure in the tank equals or exceeds a maximum pressure value and/or at least one vacuum relief valve portion adapted to allow in the tank a vacuum-compensating fluid when the pressure in the tank equals or falls below a minimum pressure value. At least one among the connecting portion, the pressure relief valve portion and/or the vacuum relief valve portion of the safety valve comprises at least one valve body of above.

In one embodiment of the present invention, the connecting portion comprises a coupling flanged element having a first coupling flange adapted to couple with a filler of the tank and a second coupling flange coupled to a selected one of said mechanical coupling portions of said at least one valve body.

In one embodiment of the present invention, the pressure relief valve portion comprises a body containing a shutter assembly comprising a shutter element movable under the action of the pressure in the tank between a closed position in which closes a vent opening of the pressure relief valve portion and an open position in which frees the vent opening. The body of the pressure relief valve portion comprises said at least one valve body, or the body of the pressure relief valve portion comprising a rain-cover element having a cavity for housing the shutter assembly protecting it from weathering.

In one embodiment of the present invention, the vacuum relief valve portion comprises said at least one valve body and a shutter assembly comprising a shutter element movable under the action of the vacuum in the tank between a closed position in which closes a suction opening of the vacuum relief valve portion and an open position in which frees the suction opening.

In one embodiment of the present invention, the pressure relief valve portion and/or the vacuum relief valve portion comprise an additional coupling flanged element comprising a first coupling flange adapted to couple with a pipe to provide/receive a fluid and a second coupling flange coupled to a selected one of said mechanical coupling portions of said at least one valve body.

In one embodiment of the present invention, the safety valve further comprises an elastic biasing arrangement coupled with the shutter assembly for providing a resisting force that opposes to the action of the pressure or vacuum in the tank.

In one embodiment of the present invention, the elastic biasing arrangement comprises an elastically deformable element, a first base and a second base coupled to opposite ends of the elastically deformable element, at least one tie-beam coupled through respective opposite ends to the first and second base so as to maintain a predetermined maximum distance between the latter. The at least one tie-beam being coupled in a bounded manner with the second base and being coupled in a sliding manner with the first base to maintain a pre-charged compression of the elastically deformable element. Moreover, the elastic biasing arrangement is coupled in a sliding manner to the shutter element with the second base of the elastic biasing arrangement that rests on the shutter.

In one embodiment of the present invention, the shutter assembly is arranged to move under the action of pressure or vacuum in the tank along a direction transversal to a direction of the force of gravity.

In one embodiment of the present invention, the coupling portion and the pressure relief valve portion or the vacuum relief valve portion share said at least one valve body.

In one embodiment of the present invention, the at least one vacuum relief valve portion comprises two vacuum relief valve portion. The safety valve further comprises a septum element provided in the coupling portion for subdividing the safety valve in a first region comprising a first one vacuum relief valve portion of the two vacuum relief valve portion and a second region comprising a second one vacuum relief valve portion of the two vacuum relief valve portion, the first region and the second region being substantially symmetrical.

In one embodiment of the present invention, the at least one vacuum relief valve portion comprises two vacuum relief valve portion, said two vacuum relief valve portion, and the safety valve further comprises coupling element adapted to couple together the shutter assemblies of the two vacuum relief valve portion.

A different aspect of the solution according to an embodiment of the invention provides a kit of components for the realization of said one safety valve.

More specifically. a kit of components for the manufacturing of a safety valve for adjusting a pressure in a tank of fluid to which the safety valve is coupled is proposed. The kit of components comprises: at least one valve body of above, at least one coupling flanged element having a first coupling flange, adapted to couple with a filler of the tank or with a flange of a pipe, and a second coupling flange adapted to couple with the valve body, at least one cover element for plugging any one of the openings provided on the valve body, at least one rain-cover element internally hollow and adapted to be mounted on the at least one valve body in correspondence of an opening of said at least two openings, at least one shutter assembly mountable in the at least one valve body or in the rain-cover element and adapted to selectively close one opening of said at least two openings of the valve body, the shutter assembly comprising a movable shutter adapted to close said one opening.

### Brief Description of the Drawings

A solution according to one or more embodiments of the invention, as well as additional features and its advantages, will be best understood by reference to the following detailed description, given merely by way of non-limiting example, to be read in conjunction with the accompanying figures (in which corresponding elements are indicated with the same or similar references and their explanation is not repeated for the sake of brevity). In this respect, it is expressly understood that the figures are not necessarily to scale (with some details that may be exaggerated and/or simplified) and that, unless otherwise indicated, they are simply used to conceptually illustrate the structures and procedures described.

These and others features and advantages of the solution according to the present invention will be better understood by reading the following detailed description of an embodiment thereof, provided merely by way of non-limitative examples, to be read in conjunction with the attached drawings, wherein:
**Figure 1A** is an isometric view of a valve body according to an embodiment of the present invention;
**Figure 1B** is a top plan view of the valve body of **Figure 1A****;**
**Figure 1C** is a side view of the valve body of **Figure 1A****;**
**Figure 2A** is an isometric view of a valve element that may be associated with the valve body, in particular a flanged coupling element according to one embodiment of the present invention;
**Figure 2B** is a plan view from above of the flanged coupling element of **Figure 2A****;**
**Figure 2C** is a side view of the flanged coupling element of **Figure 2A****;**
**Figure 3** is a cross-sectional view of a breather safety valve realized with valve bodies and valve elements shown in the previous figures, according to an embodiment of the present invention;
**Figures 4A-4E** are cross-sectional views of further configurations of the safety valves according to embodiments of the present invention;
**Figure 5** is a side cross-sectional view of a breather safety valve according to another embodiment of the present invention;
**Figure 6** is a side sectional view of a breather safety valve according to still another embodiment of the present invention, and
**Figures 7A** and **7B** are cross-sectional views of improved breather safety valves based on the breather valve shown in **Figure 4A****.**

### Detailed Description of the Invention

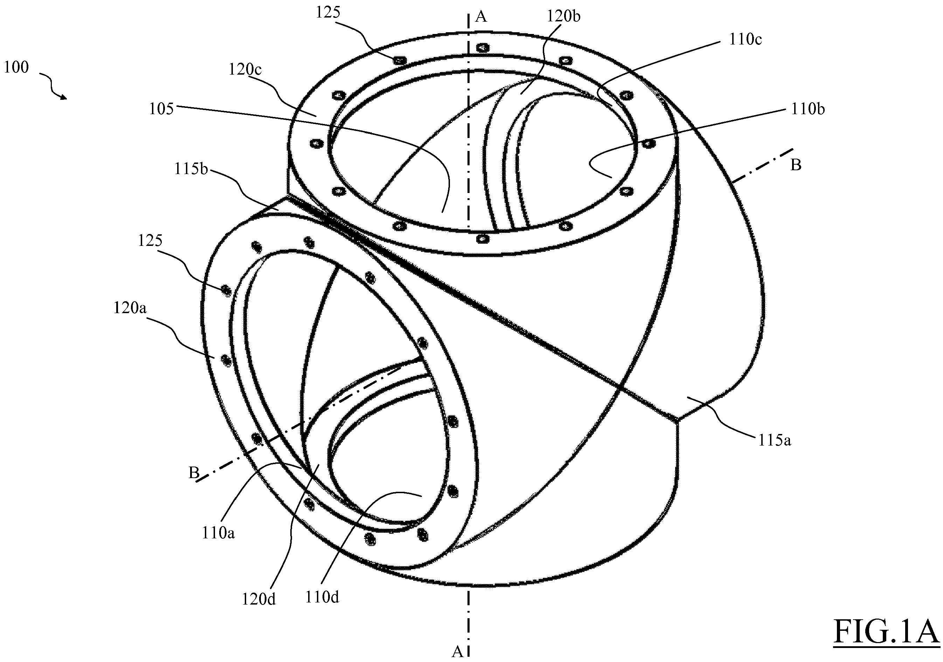

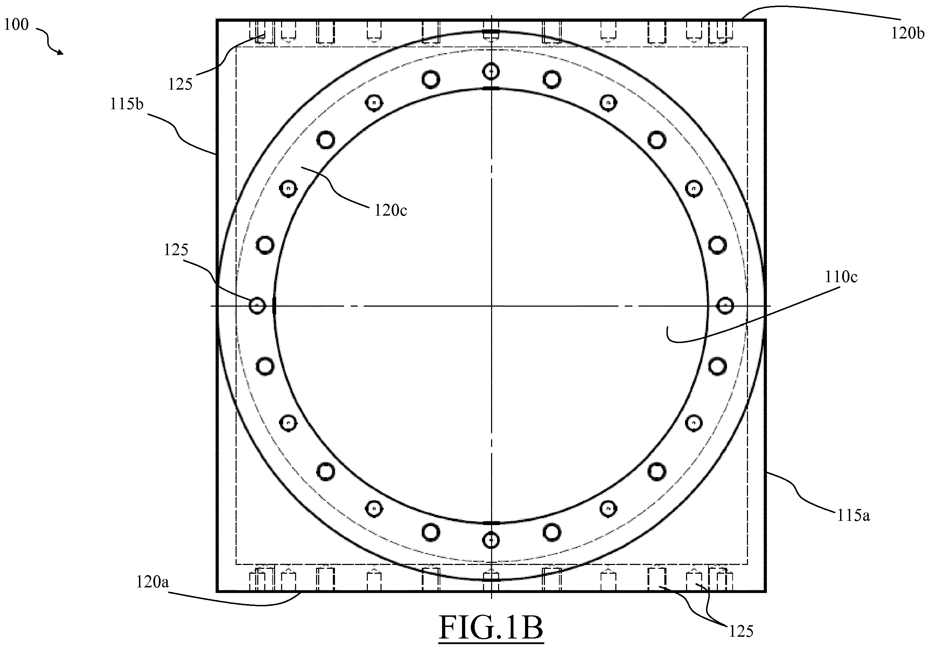

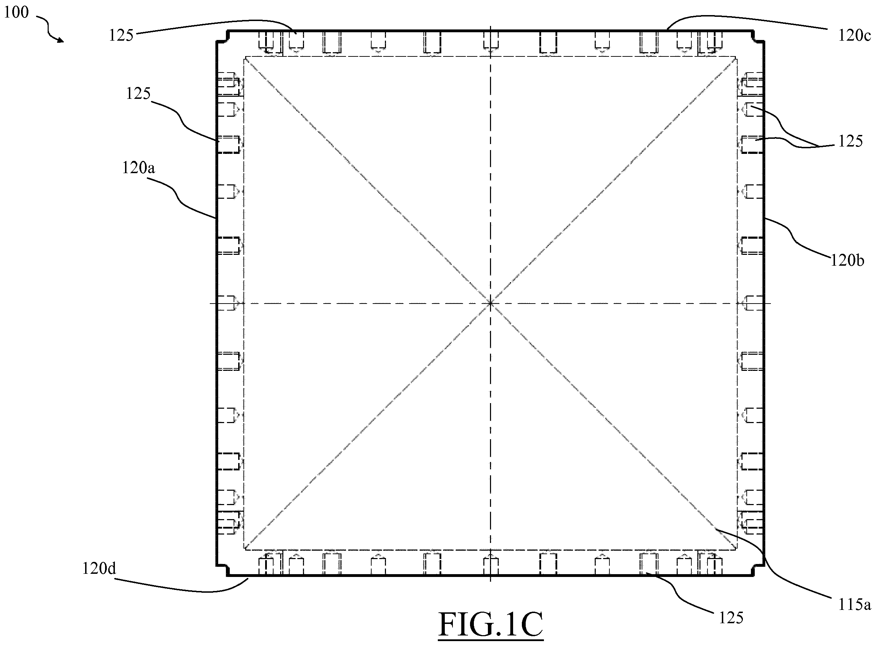

With reference to the figures, **Figures 1A - 1C** are an axonometric view, top plan and side view, respectively, of a valve body **100** for safety valve according to an embodiment of the present invention.

The valve body **100** defines an internal cavity **105,** accessible from the outside through a plurality of openings **110a, 110b, 110c, 110d** provided on the valve body **100.**

For example, the valve body **100** has a generally polyhedral structure, such as a prism with a quadrangular base, i.e. the valve body **100** has a substantially box-like structure.

In the valve body according to an embodiment of the present invention at least two of the openings **110a, 110b, 110c, 110d** are provided on the valve body **100** so as to lie on planes that are substantially parallel one another.

For example, the valve body **100** has six faces, and the openings **110a, 110b, 110c, 110d** are provided on four of the six faces, in particular on respective pairs of opposite faces of the valve body **100.**

For example, the openings **110a** and **110b** are formed in opposite positions on the valve body **100** and are a substantially coaxially aligned on an axis **A-A,** while the openings **110c** and **110d** are formed in opposite positions on the valve body **100** and are substantially coaxially aligned on a different axis **B-B**. In one embodiment of the present invention, the axes **A-A** and **B-B** are transversal to each other.

Preferably, although not limitatively, the openings **110a, 110b, 110c, 110d** are substantially circular. For example, the openings **110a, 110b, 110c, 110d** are formed with substantially a same diameter.

According to the present invention, the valve body **100** has a groin-vault structure comprising a first wall **115a** and a second wall **115b** each with a groin-vault structure. The walls **115a** and **115b** are connected together; in particular, each groin-vault wall **115a** and **115b** comprises four perimetric arcs, each perimetric arc of the first wall **115b** being coupled with a corresponding arc of the second wall **115b.** Preferably, the first wall **115a** and the second wall **115b** are formed in one piece. Each pair of coupled perimetric arcs defines the outer perimeter of a corresponding opening of the four openings **110a, 110b, 110c** and **110d.**

In correspondence of each one of the openings **110a, 110b, 110c** and **110d** the valve body **100** comprises a respective coupling portion. For example, the valve body **100** comprises a respective border **120a, 120b, 120c** and **120d,** preferably in correspondence of each pair of coupled perimeter arcs in such a way that the borders **120a, 120b, 120c** and **120d** delimit a corresponding one of the openings **110a, 110b, 110c** and **110d**.

Preferably, each border **120a, 120b, 120c** and **120d** is a band which extends for a distance d towards the center of the correspondent opening **110a, 110b, 110c** and **110d** (transversely with respect to the axis **A-A** or **B-B**), i.e. the borders **120a, 120b, 120c** and **120d** have width d.

Each coupling portion (i.e., the borders **120a, 120b, 120c** and **120d**) comprises a plurality of coupling elements for coupling with other valve elements (described below in the present) and/or with another similar valve body (not shown in **Figures 1A-1C**) **100.** For example, the borders **120a, 120b, 120c** and **120d** comprise holes, through holes, threaded holes and/or threaded through holes in the following referred to simply as holes **125.** The holes **125** allow a mechanical coupling (for example, a clamping by means of screws, bolts and nuts or tie bolts) between the valve body **100** and other valve elements (as described in detail below in the present). In alternative embodiments, the coupling elements are of different type; for example, an alternative valve body comprises a plurality of protruding elements and/or receptacles adapted to allow a bayonet mounting with recesses or protruding elements, respectively.

Thanks to the holes **125** provided on the borders **120a, 120b, 120c** and **120d,** it is possible to couple the valve body **100** to further valve bodies (as described in the following) without exploiting coupling means such as (threaded or unthreaded) sleeves (not shown) to be inserted partly in the openings **110a, 110b, 110c** and **110d** of the valve body **100** and partly in a corresponding opening of the further valve bodies that would reduce an operative diameter thereof, and thus also a fluid flow rate therethrough.

In one embodiment, the valve body **100** is formed in a resistant material, for example a metal such as carbon steel or stainless steel SS316 or SS304 able to withstand operating pressures up to 0,5barg or even more, such as pressures in the order of 5barg, according to the implementation requirements (generally, the valve body **100** is dimensioned in such a way to support a pressure greater than or equal to a maximum pressure sustainable by a tank to which is coupled).

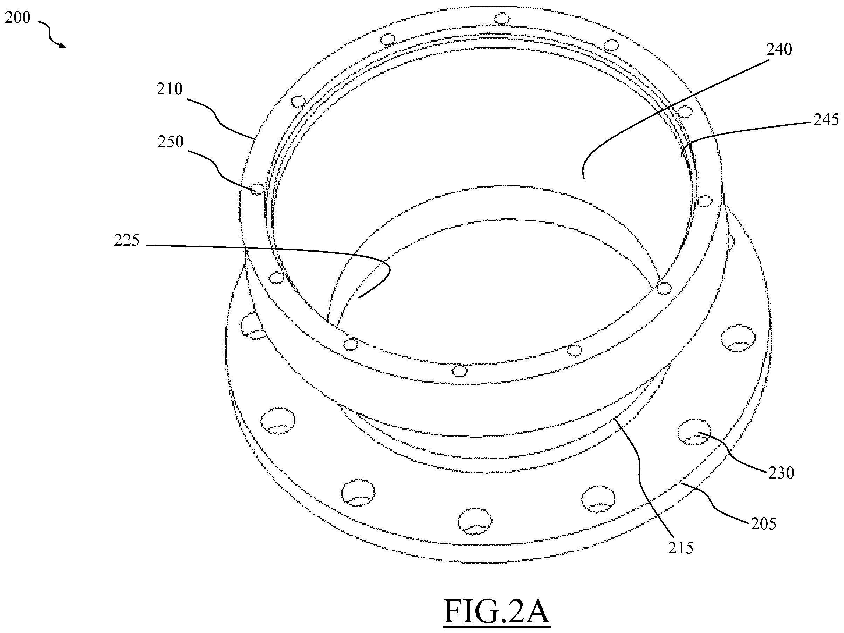

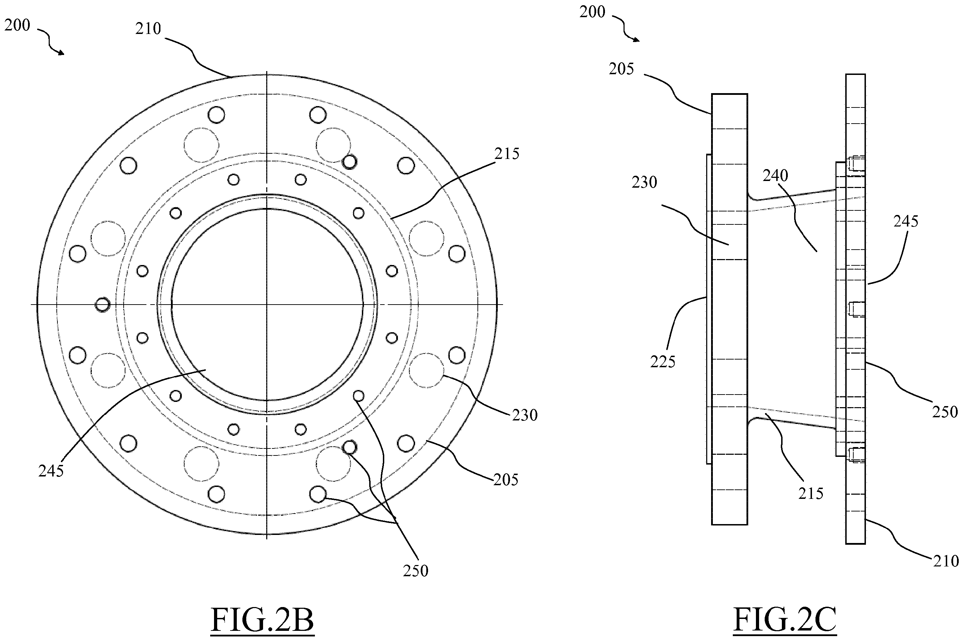

Considering jointly **Figures 2A-2C****,** they are an axonometric, top and side views, respectively, of a valve element associated with the valve body **100,** in particular a flanged coupling element **200** according to an embodiment of the present invention .

The flanged coupling element **200** is a valve element which has the purpose of connecting (enabling fluid communication) the valve body **100** with other elements (such as a tank or a pipe, not shown) of an industrial plant.

The flanged coupling element **200** comprises a first coupling flange **205** adapted to couple with (a similar flange provided on) a nozzle provided on the fluid tank (for example, a liquid and/or gas), a second coupling flange **210** adapted to couple with the valve body **100** and an intermediate portion **215.** Preferably, the flanged coupling element **200** is formed in one piece, in a suitable material, for example a metal such as steel (similarly to what described above with respect to the valve body **100**).

The first coupling flange **205** surrounds an opening **225** and serves for the mechanical coupling with a tank or with a pipe (both not shown). For example, in the coupling flange **205** a plurality of coupling elements is provided, such as through holes and/or threaded through holes, hereafter referred to simply as holes **230,** adapted to perform a mechanical coupling (for example, in combination with of connecting elements such as screws, studs, and/or bolts and nuts) with corresponding coupling elements (not shown), for example, again through holes or threaded through holes, provided in a flange of the tank or the pipe.

In one embodiment of the present invention, the first coupling flange has a substantially disc-like shape, in particular circular.

The intermediate portion **215** has a substantially frustoconical shape with a minor base connected to the first coupling flange **205** and a larger base connected to the second coupling flange **210.** The intermediate portion **215** comprises an internal cavity **240** which is in fluid communication with the opening **225** surrounded by the first coupling flange **205** (at a first end) and with an opening **245** surrounded by the second coupling flange **210** (at a second end). Preferably, the internal cavity **240** has substantially a frustoconical shape as well similarly to the intermediate portion **215.**

The second coupling flange **210** serves to couple the flanged coupling element **200** to the valve body **100** or to other valve elements (described in the following of the present description). For example, the second flange **210** has a shape adapted to couple with any one of the borders **120a, 120b, 120c** and **120d** of the valve body **100.** To this end, the second coupling flange **210** comprises a plurality of coupling elements, for example, unthreaded and/or threaded holes and/or through holes hereinafter indicated simply as holes **250,** suitable for providing a mechanical coupling (for example, in combination with of connecting elements such as screws, studs and/or nuts and bolts) with the plurality of holes **125** of any one of the borders **120a, 120b, 120c** and **120d** of the valve body **100.**

In one embodiment of the present invention, the second coupling flange **210** has a substantially disc-like shape, for example circular.

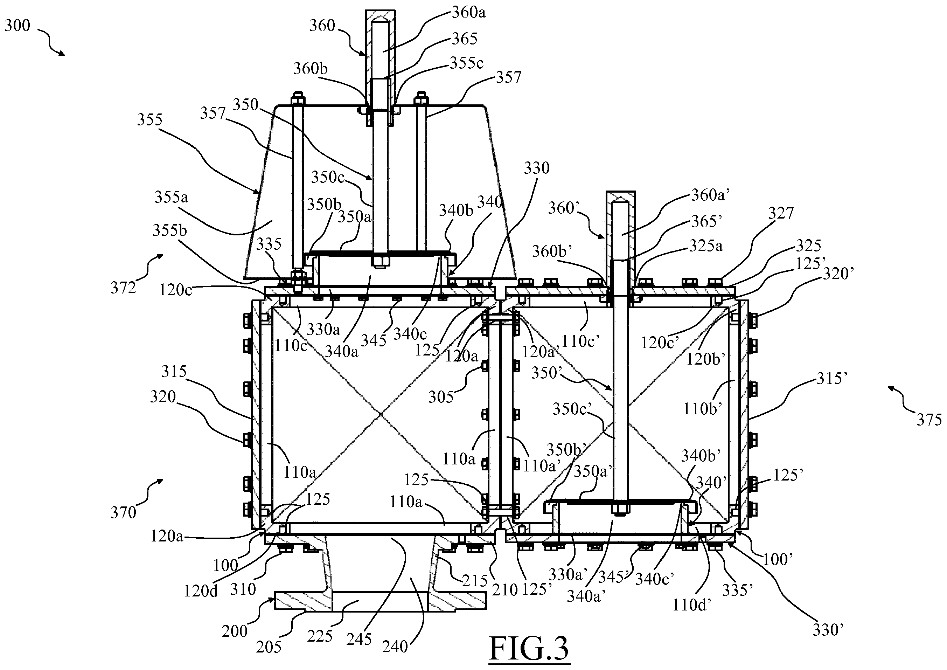

Turning now to **Figure 3****,** it is a cross-sectional view of a breather safety valve, more simply breather valve **300** in the following, provided by means of the valve bodies and flanged coupling elements described above, according to an embodiment of the present invention.

The breather valve **300** is adapted to protect a tank (not shown) from over-pressures and under-pressures inside the tank. In particular, the breather valve **300** is adapted to vent a fluid, such as a gas, into the external environment when the pressure inside a tank to which is coupled exceeds a maximum value, and to draw air from the external environment when the pressure inside the tank drops below a minimum value, in such a way to compensate for over-pressures and under-pressures which may occur when used with a fluid tank.

The breather valve **300** comprises a first valve body **100** and a second valve body **100'** similar to the first valve body **100,** which are coupled together by means of the respective plurality of holes **125** and **125'** of the respective borders **120a** and **120b';** for example, the borders **120b** and **120a'** are clamped together by means of a plurality of connecting elements **305** such as for example nuts and bolts or studs inserted into the plurality of holes **125** and **125'** aligned one with the other. Consequently, the openings **110b** and **110a'** of the two valve bodies **100** and **100'** are coupled together and the two valve bodies **100** and **100'** are in fluid communication one with the other.

The flanged coupling element **200** is coupled with the first valve body **100,** for example by tightening together the second coupling flange **210** of the element flanged coupling element **200** and the border **120d** of the first valve body **100** by means of a plurality of connecting elements such as for example screws **310** inserted into the plurality of holes **125** and **250** aligned with each other. Consequently, the openings **110d** and **245** are coupled one with the other and the valve body **100** is in fluid communication with the cavity **240** of the flanged coupling element **200.**

Advantageously, a sealing element (not shown, for example a ring made of elastomeric material) may be interposed between the second coupling flange **210** of the flanged coupling element **200** and the border **120d** of the first valve body **100** in order to ensure a better airtight sealing of the breather valve **300.**

The breather valve **300** comprises a pair of cover elements **315** and **315'.** The cover elements **315** and **315'** are adapted to close, preferably hermetically, to any one of the openings **110a**, **110b**, **110c** and **110d** of the first valve body **100** and/or of the openings **110a', 110b', 110c'** and **110d'** of the second the valve body **100'.**

For example, the cover parts **315** and **315'** comprise a plurality of through holes and/or threaded through holes (not visible in the figure) adapted to correspond to the holes **125** and **125'** of the valve bodies **100** and **100'.** Preferably, the cover parts **315** and **315' are** formed in a resistant material, for example a metal such as steel (similarly to what described above with respect to the valve body **100**).

In the breather valve **300** configuration of **Figure 3****,** the cover parts **315** and **315'** are coupled with the first valve body **100** and with second valve body **100',** respectively; for example, the cover element **315** is clamped to the border **120a** of the first valve body **100,** while the cover member **315'** is clamped to the border **120b'** of the second valve body **100',** both by means of a plurality of screws **320** and **320'** inserted into the plurality of holes **125** and **125'** aligned with the holes of the respective cover elements **315** and **315'.** Accordingly, in the depicted configuration the openings **110a** and **110b'** of the valve bodies **100** and **100'** are closed by the respective cover elements **315** and **315'.**

Advantageously, a respective sealing element (not shown, for example a ring made of elastomeric material) may be interposed between the cover parts **315** and **315'** and the borders **120d** and **120d',** respectively, of the valve bodies **100** and **100'** in order to ensure a better airtight sealing of the breather valve **300.**

The breather valve **300** comprises a perforated cover element **325** adapted to be mounted on any one of the openings **110a**, **110b**, **110c** and **110d** of the first valve body **100** and the openings **110a', 110b', 110c'** and **110d'** of the second body valve **100'.**

In one embodiment according to the present invention, the cover element **325** has a perforated disc-like shape, in particular circular, and is adapted to couple with any one of the valve bodies **100** and **100'.** For example, the cover element **325** comprises a plurality of perforated threaded through holes. The cover element **325** is provided with an opening **325a,** preferably formed in a central position of the perforated cover **325.** Preferably, the cover element **325** is formed in a perforated-resistant material, for example a metal such as steel (similarly to what described above with respect to the valve body **100**).

In the depicted configuration of the breather valve **300,** the cover element **325** is coupled with the second hollow valve body **100';** for example, the cover element **325** is clamped to the perforated border **120c'** of the second valve body **100'** by means of a plurality of connecting elements such as for example screws **327** inserted into the plurality of holes **125** aligned with the holes of the cover member **325.**

Advantageously, a sealing element (not shown, for example a ring made of elastomeric material) may be interposed between the perforated cover element **325** and the border **120c'** of the second valve body **100'** so as to ensure a better airtight sealing of the breather valve **300.**

The breather valve **300** comprises a pair of interface elements **330** and **330'** adapted to be mounted on any one of the openings **110a, 110b, 110c** and **110d** of the first valve body **100** and the openings **110a', 110b', 110c'** and **110d'** of the second valve body **100'.**

In one embodiment according to the present invention, the interface elements **330** and **330'** have a disc-like shape, in particular circular, and are adapted to couple with any one of the valve bodies **100** and **100'** and/or with the flanged coupling element **200.** For example, each interface element **330** and **330'** comprises a plurality of threaded through holes. Each interface element **330** and **330'** is provided with an opening **330a** and **330a'** (having a diameter smaller than the diameter of the openings **110a**, **110b**, **110c** and **110d** of the first valve body **100** and the openings **110a', 110b', 110c'** and **110d'** of the second valve body **100**'), preferably formed in a central position of the interface element **330** and **330'.** Preferably, the interface elements **330** and **330'** are formed in a resistant material, for example a metal such as steel (similarly to what described above with respect to the valve body **100**).

In the depicted configuration of the breather valve **300,** the interface elements **330** and **330'** are coupled with the first valve body **100** and with second valve body **100',** respectively; for example, the interface element **330** is clamped to the border **120c** of the first valve body **100,** while the interface element **330'** is clamped to the border **120d'** of the second valve body **100'** both by means of a plurality of connecting elements such as for example screws **335** and **335'** inserted into the plurality of holes **125** aligned with the holes of the respective interface elements **330** and **330'.**

Advantageously, a respective sealing element (not shown, for example a ring made of elastomeric material) may be interposed between the interface elements **330** and **330'** and the borders **120c** and **120d',** respectively, of the valve bodies **100** and **100'** in such a way to ensure a better airtight sealing of the breather valve **300.**

In addition, a filter elements, for example a net or grate (not shown) may be mounted on the interface **330'** in correspondence of its opening **330a'** so as to prevent access inside the valve body **100'** to foreign bodies from the outside environment.

The breather valve **300** comprises a pair of seat elements **340** and **340',** each of which is adapted to be coupled with a respective one of the interface elements **330** and **330',** respectively, preferably at the same border that delimits the respective openings **330a** and **330a'.**

In one embodiment according to the present invention, each seat element **340** and **340'** has a substantially hollow cylindrical shape with a diameter of an inner cavity **340a** and **340a',** respectively, substantially corresponding to the diameter of the openings **330a** and **330a',** respectively. In addition, each seat element **340** and **340'** comprises a plurality of through holes or threaded through holes (not visible in the figure) in correspondence with a first base and comprises a step-like border **340b** and **340b',** respectively, in correspondence of its second base (opposite to the first one) that defines an opening **340c** and **340c'.** Preferably, the seat elements **340** and **340'** are formed in a resistant material, for example a metal such as steel (similarly to what described above with respect to the valve body **100**).

Seat element **340** and **340'** are coupled with the interface elements **330** and **330',** respectively; for example, each seat element is clamped to the respective interface element **330** and **330'** by means of a plurality of connecting elements such as for example screws **345** and **345'** inserted into the plurality of holes of the seat elements **340** and **340'** aligned with holes (not shown) of the respective interface elements **330** and **330'** formed at the openings **330a** and **330a',** respectively.

In particular, the seat element **340** coupled with the interface **330** clamped to the first valve body **100** is coupled with the interface **330** in such a way to protrude outside of the valve body **100.** In contrast, the seat element **340'** is coupled with the interface **330'** clamped to the second valve body **100'** in such a way to protrude inside the valve body **100'.**

Advantageously, a respective sealing element (not shown, for example a ring made of elastomeric material) may be interposed between the seat elements **340** and **340'** and the interface elements **330** and **330',** respectively, of the valve bodies **100** and **100'** so as to ensure a better airtight sealing of the breather valve **300.**

The breather valve **300** comprises a pair of shutter assemblies **350** and **350',** each suited to close any one of the openings **340c** or **340c'** of a respective one of the seat elements **340** or **340',** abutting against a respective seat element **340** or **340'.**

Each shutter assembly **350** and **350'** comprises a shutter **350a** and **350a'** with a shape and size adapted to cover the opening **340c** or **340c',** a sealing element **350b** and **350b'** (for example, a gasket) in order to ensure a hermetic sealing between the shutter **350a** and **350a'** and the respective opening **340c** and **340c'** and a stem **350c** and **350c'** for guiding a movement of the shutter assembly **350.**

Preferably, the shutters **350a** and **350a'** have a disc-like shape, while the sealing elements **350b** and **350b'** have substantially the shape of a circular crown with a step-like border adapted to abut against the border of the step **340b** and **340b'** of the seat element **340** and **340'.** The shutters **350a** and **350a'** are formed in a resistant material, for example a metal such as steel; otherwise, the sealing elements **350b** and **350b'** are formed in a resilient material, for example an elastomer (e.g., VITON or NBR) or a polymer (e.g., PTFE).

The shutters **350a** and **350a'** and the sealing elements **350b** and **350b'** are coupled together. For example, the sealing elements **350b** and **350b'** and the plugs **350a** and **350a'** are locked together by means of fasteners - not shown; for example fasteners thin disc-shaped, clamped together by means of nuts secured to a threaded end of the stems **350c** and **350c'.**

The stems **350c** and **350c'** are coupled with the shutters **350a** and **350a',** respectively, preferably in a central position of the latter, and extend themselves transversely with respect to the shutters **350a** and **350a'** in a direction opposite to the direction in which the step-like border of the of the seal elements **350b** and **350b'** protrudes from the shutters **350a** and **350a',** respectively.

With reference to the shutter assembly **350',** it is selectively used to plug the opening **340c'** of the interface **330'** in the second valve body **100'** when the border step of the sealing element **350b'** is in abutment against the border step **340b'** of seat element **340'.** The stem **350c'** extends through the valve body **100'** until it reaches the opening **325a** of the perforated element **325.** In particular, the stem and **350c'** has a size adapted to slide through the opening **325a** of the perforated element **325.**

The breather valve element **300** preferably comprises a rain cover **355** adapted to be coupled with the interface **330** in order to protect the interface element **330,** the seat element **340** and any other element that protrudes outside of the valve body **100** over its opening **110c**, at the same time preventing access to the interior of the valve body **100** to atmospheric precipitation (i.e., rain, snow, etc.).

The rain cover element **355** has a substantially frustoconical shape. The rain cover element **355** has an opened larger base and comprises a cavity **355a.** The rain cover element **355** is coupled with the interface **330** via a plurality of support bars **357** (two visible in **Figure 3**) coupled via a first end to the rain cover element **355** and through a second end thereof to the interface element **330** in order to maintain the rain cover element **355** spaced apart from the interface element **330.**

The rain cover element **355** comprises an opening **355b** adapted to receive the stem **350c.**

In addition, a filter element, such as a net or a grating (not shown) may be mounted on the rain cover **350** in correspondence of its opened larger base, between the rain cover element **355** and the seat element **340** in order to prevent access into the interior of the cavity **355a** to foreign bodies from the external environment.

In order to guide the movement of the stems **350c** and **350c',** the breather valve **300** comprises a pair of stem guides **360** and **360'.** Each stem guide **360** and **360'** preferably has a substantially cylindrical shape and comprises a cavity **360a** and **360a'** accessible through an opening **360b** and **360b'** formed in a base of the cylinder, on the contrary an opposite base is closed.

The stem guide **360** is coupled with the rain cover **355** in such a way that the opening **360b** of the stem **350c** corresponds to the opening **355b** of the rain cover element **355.** Accordingly, the stem **350c** is constrained to slide along the cavity **360a** of the stem guide **360,** which, at the same time, closes the opening **355b** insulating the cavity **355a** of the rain cover element **355** from the external environment.

The stem guide **360'** is coupled with the perforated cover element **325** in such a way that the opening **360b'** of the stem guide **360'** corresponds to the opening **325a** of the perforated cover element **325.** Consequently, the stem **350c** is constrained to slide along the cavity **360a'** of the stem guide **360',** which, at the same time, closes the opening **360b'** insulating the interior of the valve body **100'** from the external environment.

Sleeves **365** and **365'** may be provided within the cavity **360a** and **360a'** of the stem guide **360** and **360,** respectively. The sleeves **365** and **365'** are adapted to be coupled with the stems **350c** and **350c',** respectively, for adapting the size of the stems **350c** and **350c'** to the size of the cavities **360a** and **360a'** of the stem guides **360** and **360,** respectively, in such a way that the stems **350c** and **350c'** do not wobble within the respective cavities **360a** and **360a'** while sliding therein.

In summary, the breather valve **300** comprises a connection portion **370** coupled and in fluid communication with the fluid tank (in use), a pressure relief valve portion **372** adapted to reduce an over-pressure in the tank when the tank pressure equals or exceeds a maximum pressure value (as described below) and a vacuum relief valve portion **375** adapted to allow a vacuum compensation fluid in the tank when the pressure in the tank equals or falls below a minimum value pressure (as described below).

The connecting portion **370** comprises the valve body **100** and the flanged coupling element **200.** The pressure relief valve portion **372** comprises the following valve elements: the shutter assembly **350,** the interface element **330,** the seat element **340,** the cover element **315,** the rain cover element **355,** the stem guide **360** and the sleeve **365** (if provided). The vacuum relief valve portion **375** comprises the valve body and the following valve elements: the shutter assembly **350',** the interface element **330',** the seat element **340',** the cover element **315',** the perforated cover element **325,** the stem guide **360'** and the sleeve **365'** (if provided).

Having described the structure of the breather valve **300** according to an embodiment of the present invention, it will now be briefly described the operation thereof.

In use, the breather valve **300** is coupled and in fluid communication with a tank (not shown) as described above, through the first flange **205** of the flanged coupling element **200.**

In a closed position, the shutter assembly **350** closes the opening **330a,** abutting against the seat element **340.** When inside the tank, and, consequently, within the valve bodies **100** and **100'** of the breather valve **300** the pressure increases to a value equal to, or higher than, a predetermined maximum pressure value, a force exerted by the fluid on the shutter assembly **350** is able to lift of the latter (i.e., a force exerted by the pressure inside the tank overcomes the weight force of the shutter assembly **350**). In this case, the shutter assembly switches to the open position, i.e. the shutter assembly **350** moves away from the seat element **340** (with the stem which slide through the cavity **360a** of the stem guide **360**) and the shutter **350a** frees the opening **340c** that serves as a vent opening for the safety valve **300,** thereby allowing the pressurized fluid to leave the tank and the breather valve **300,** passing through the cavity **355a** of the rain cover element **355,** and reach the external environment through the opened larger base of the rain cover element **355.**

It is possible to set the maximum pressure value inside the tank (i.e., the pressure value reached and/or trespassed which the pressure relief valve portion **372** of the breather valve **300** is activated) by selecting an appropriate weight for the shutter assembly.

Once that has been expelled a sufficient amount of fluid, the pressure in the tank is reduced to a value for which the force exerted by the fluid contained in the tank on the shutter assembly **350** is no longer able to overcome the weight force of the shutter assembly **350,** which then goes back down (with the stem that slides through the cavity **360a** of the stem guide **360**) towards the seat element **340** down to cover the opening **340c** of the latter (thereby insulating the tank and the breather valve **300** again from the external environment).

In this way, it is possible to prevent deformations to the structure of the tank due to an excessive pressure inside the tank in an automatic and completely passive manner.

Otherwise, when inside the tank and the breather valve **300** (i.e., within the valve bodies **100** and **100**') the pressure in the tank is reduced to a value equal to, or lower than, a predetermined minimum pressure value, it happens that the difference between the pressure in the tank and the pressure of the (gas, i.e. air, of) external environment reaches a value that causes the pressure of the external environment exerting a thrust on the shutter assembly **350'** sufficient to lift the latter (i.e., the weight force associated with shutter assembly **350'** is overcome by the force exerted by external pressure). In other words, the shutter assembly **350** is moved by the vacuum created in the tank. The shutter assembly **350'** moves away from the seat element **340'** (with the stem that slides through the cavity **360a'** of the stem guide **360**') thereby allowing air from the external environment entering through the opening **340c',** which operates as a suction opening of the safety valve **300,** in the tank, thereby compensating for the vacuum generated therein.

Similarly to the previous case, it is possible to set the minimum pressure value by selecting an appropriate weight for the shutter assembly.

Once that a sufficient amount of air has been taken in the tank, the pressure within the tank goes back to a value that decreases the difference between the pressure inside the tank and the pressure of the external environment, thereby reducing the force exerted on the shutter assembly **350'** to an intensity lower than the weight force acting on the shutter assembly **350'** which then goes down (with the stem that slides along the cavity **360a'** of the stem guide **360**') towards the seat element **340'** down to cover the suction opening **340c'** thereof (thereby insulating again the tank and the breather valve **300** from the external environment).

In this way, it is possible to prevent deformations to the structure of the tank due to excessive vacuum within the tank in an automatic and completely passive manner.

The use of the valve body **100** allows providing a safety valve, as the breather safety valve **300,** extremely compact and widely customizable according to various specific implementations.

In particular, the valve body **100** allows providing a plurality of alternative configurations of safety valves to the one just described, each suitable for different implementations requirements, by using the same valve elements just described. Furthermore, the safety valve **300** has a highly modular structure; in fact, it is possible to change a valve already installed in a hydraulic system for varying the values of maximum and/or minimum pressures, for changing the pressure relief, vacuum relief or breather valve in one of the other types of valves by simply replacing the shutter elements of the shutter arrangements and/or by adding or removing pressure relief and/or vacuum relief valve portions to the valve (thus eliminating the need of replacing a known-type valve with a second known-type valve or adding the latter to the hydraulic system to be operated in combination with the first known-type valve that is already connected to the hydraulic system).

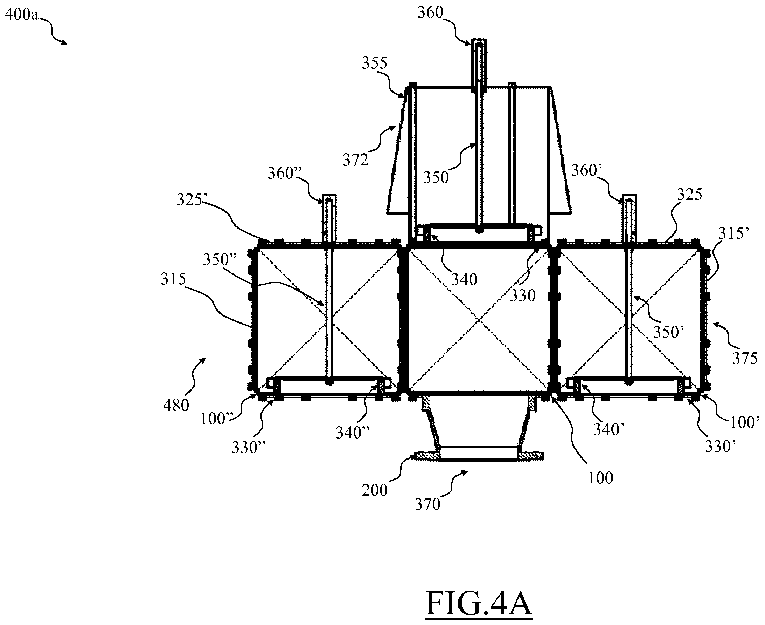

**Figures 4A-4E** are cross-sectional views of some additional possible configurations of safety valves **400a** - **400e** according to embodiments of the present invention.

The breather safety valve, or simply breather valve **400a,** shown in **Figure 4A****,** differs from the breather valve **300** as follows.

The breather valve **400a** comprises a additional vacuum valve portion **480** coupled with the first valve body **100** via the border **120a** of the latter (in a position opposed to the vacuum relief valve portion **375**).

The additional vacuum relief valve portion **480** comprises a third valve body **100"** and the following valve elements: a shutter assembly **350",** an interface element **330",** a seat element **340',** the cover element **315,** a perforated cover element **325',** a stem guide **360"** and a sleeve **365"** assembled in a similar manner to that described above in relation to the vacuum relief valve portion **375.**

Thanks to the additional vacuum relief valve portion **480** that operates in combination with the vacuum relief valve portion **375,** the breather valve **400a** restores, following a vacuum generated in the tank, the pressure to a range of correct values within the tank (not shown) to which is coupled more quickly than the breather valve **300** allowing a greater replenishing flow rate (i.e. the flow rate of the air introduced into the container from the outside).

The structure of the breather valve **400a** just described may be improved in order to ensure that the additional vacuum relief valve portion **480** operates substantially simultaneously with the vacuum relief valve portion **375** even though the two shutter assemblies **350'** and **350"** may have slightly different weight and/or sizes due to manufacturing tolerances.

Indeed, it may happens that when the pressure in the tank is reduced to a value equal to, or lower than, a predetermined minimum pressure value one between the shutter assemblies, for example the shutter element **350',** moves away from the corresponding seat element **340** earlier than the other one, e.g. the shutter element **350".** Under this circumstances inside the valve bodies **100, 100'** and **100"** air vortexes are generated that prevent the movement of the additional shutter assembly **350"** in the opening position (i.e., separated from the corresponding seat element **340**").

The Applicant has found that only for very steep pressure changes, e.g. a change equal to, or greater than, the 70% of the predetermined minimum pressure value beyond the predetermined minimum pressure value both the shutter assemblies **350** and **350"** move in the opening position.

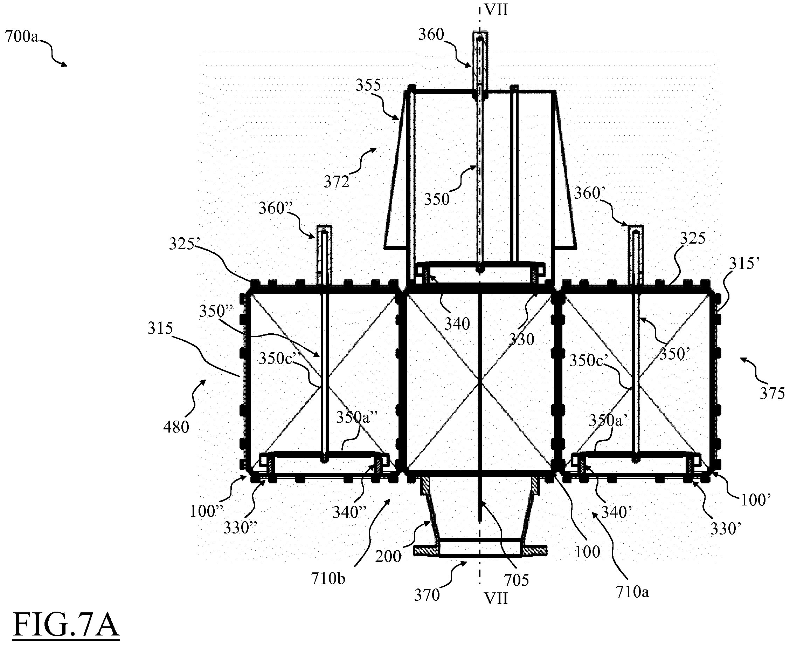

For example, **Figure 7A** is a cross-sectional view of a first improved breather safety valve **700.**

The breather valve **700** differs from the breather valve **400a** in what follows.

The breather valve **700** comprises a septum element **705.** The septum element **705** is preferably provided in the valve body **100,** which is interposed between and in fluid communication with both the additional vacuum relief valve portion **480** and the vacuum relief valve portion **375.**

The septum element **705** is adapted to subdivide substantially equally the internal cavity **105** of the valve body **100** into two halves along a direction joining the flanged coupling element **200** and the rain cover element **355.** Thus, the breather valve **700** results to be subdivided by the septum element **705** in two substantially symmetrical regions: a first region **710a** comprising a first half of the pressure relief portion **372** and the vacuum relief valve portion **375;** and a second region **710b** comprising a second half of the pressure relief portion **372** and the additional vacuum relief valve portion **480.**

To this purpose, the septum element **705** may comprise a plate shaped to fit the internal cavity **105** of the valve body **100** along a longitudinal symmetry axis **VII-VII** thereof, and which is preferably coupled with the valve body **100** in such a way to provide an airtight sealing along opposite walls of the valve body **100** (such as for example the first wall **115a** and the second wall **115b**).

Preferably, the septum element **705** is formed in a resistant material, for example a metal such as steel (similarly to what described above with respect to the valve body **100**).

In one embodiment of the invention, the septum element **705** extends from the opening **110b** of the valve body **100** (i.e., where the seat element **340'** is provided coupled with the border **120b**) to at least partly inside the internal cavity **240** of the flanged coupling element **200,** therefore subdividing also the internal cavity **240** of the flanged coupling element **200** in two substantially symmetrical halves (thereby a first half of the internal cavity **240** is comprised in the first region **710a** and a second half of the internal cavity **240** is comprised in the second region **710b**).

Thanks to the septum element **705** between the first region **710a** and the second region **710b** of the breather valve **700** a substantial pressure-decoupling is attained, particularly between the additional vacuum relief valve portion **480** and the vacuum relief valve portion **375.** In this way, the above-mentioned generation of air vortexes is greatly reduced and both the shutter assemblies **350'** and **350"** move in the opening position at the predetermined minimum pressure, or at least for pressure changes equal to, or lower than, the 20% of the predetermined minimum pressure value beyond the predetermined minimum pressure value.

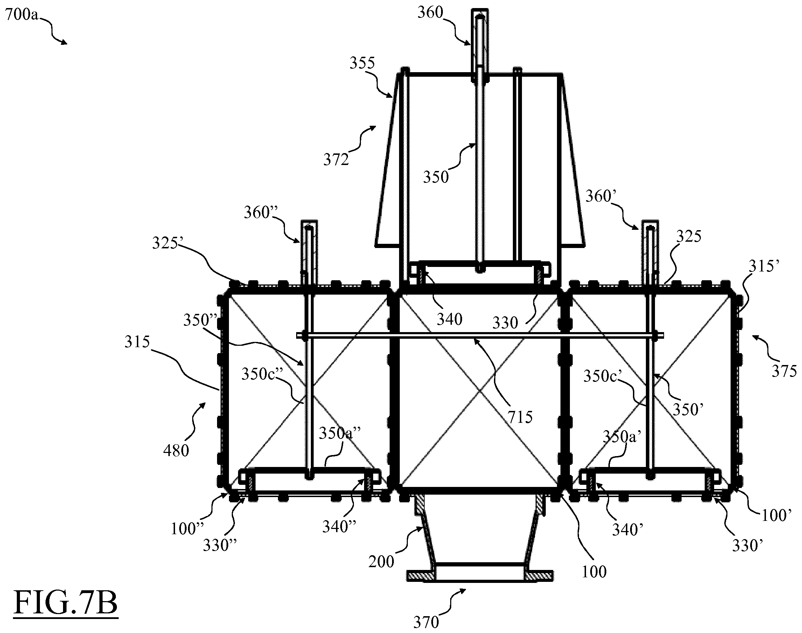

**Figure 7B** is a cross-sectional view of a second improved breather safety valve **700'.**

The breather valve **700'** differs from the breather valve **400a** in what follows.

The breather valve **700'** comprises a (mechanical) coupling element **715** adapted to couple together the two shutter assemblies **350** and **350".**

In one embodiment of the invention, the coupling element **715** comprises a (at least one) beam that rigidly couple together the stems **350c'** and **350c"** of the two shutter assemblies **350'** and **350".** For example, opposite ends of the coupling element **715** are coupled with a respective one of the stems **350c'** and **350c"** of the two shutter assemblies **350'** and **350".** The coupling element **715** is coupled with the stems **350c'** and **350c"** in such a way to allow the latter properly sliding along the respective stem guides **360'** and **360";** e.g., the coupling element **715** is coupled with the stems **350c'** and **350c"** in a position spaced apart from a free end thereof at least corresponding to a length of the cavities **360a'** and **360a"** of the stem guides **360'** and **360".**

Preferably, the coupling element **715** is formed in a resistant material, for example a metal such as steel (similarly to what described above with respect to the valve body **100**).

Thanks to the coupling element **715** of the breather valve **700'** the movement of one of the two shutter assemblies **350'** and **350"** of the additional vacuum relief valve portion **480** and of the vacuum relief valve portion **375,** respectively, is transmitted to the other one.

Indeed, whether one between the shutter assemblies **350'** and **350"** starts to move away from its seat element **340'** or **340",** respectively, draws the other shutter assembly **350"** or **350'** away from the respective seat element **340"** or **340'** as well, thanks to the coupling element **715** that rigidly couples the two stems **350c'** and **350c"** together.

Also in this case, the above-mentioned generation of air vortexes is greatly reduced and the both the shutter assemblies **350'** and **350"** move in the opening position at the predetermined minimum pressure, or at least for pressure changes equal to, or lower than, the 20% of the predetermined minimum pressure value beyond the predetermined minimum pressure value.

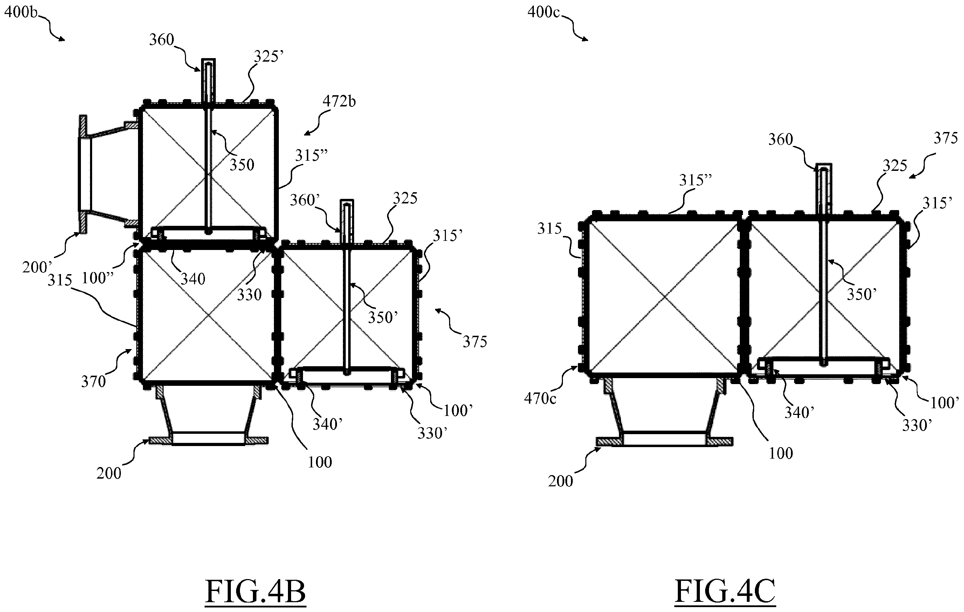

The breather safety valve, or simply breather valve **400b,** as illustrated in **Figure 4B****,** differs from the breather valve **300** as follows.

The breather valve **400b** comprises a modified pressure relief valve portion **472b** (which replaces the pressure relief valve portion **372**) adapted to expel fluid in a pipe (or a further tank not shown) coupled with it, rather than in the atmosphere (i.e., the external environment).

The modified pressure relief valve portion **472b** comprises a third valve body **100"** in replacement of the rain cover **355,** and the following valve elements: an additional cover element **315",** an additional perforated cover element **325"** and a additional coupling flanged element **200'.**

The third valve body **100"** is coupled with the interface **330** via its border **120d"** in a similar manner as described above (in this way, the first valve body **100** and the third valve body **100"** are in fluid communication through the opening **330a** of the interface element **330**).

The additional perforated cover element **325"** is coupled with the border **120c"** of the third valve body **100"** in a manner similar to that described above. In this case, the shutter assembly **350** is contained within the third valve body **100"** with its stem **350c** that extends through the valve body **100"** up to be received by the opening **325a"** of the additional perforated cover element **325"(in** a similar manner to that described above).

In the breather valve **400b,** the stem guide **360** is coupled with the additional perforated cover element **325"** in a manner similar to that described above so as to guide the sliding of the stem **350c.** As above, the sleeve **365** may be provided to prevent wobbling of the stem **350c** inside the cavity **360a** of the stem guide **360.**

The additional cover element **315"** is coupled with the border **120b"** of the third valve body **100"** so as to close the opening **110b"** of the latter (in a manner similar to that described above).

The additional flanged coupling element **200'** is coupled with the border **120a"** of the third valve body **100"** (in a manner similar to that described above).

During operation of the breather valve **400b,** when the pressure inside the tank (not shown) equals or exceeds the maximum predetermined value, the shutter assembly **350** moves away from the seat element **340** allowing the fluid to enter within the third valve body **100"** and to be expelled into the pipe coupled with the third valve body **100"** via the additional flanged coupling element **200'.**

The safety valve shown in **Figure 4C** is a vacuum relief safety valve, or simply vacuum relief valve **400c,** and differs from the breather valve **300** in what follows.

The vacuum relief valve **400c** does not comprise of the pressure relief valve portion **372;** i.e. the vacuum relief valve **400c** does not comprise the shutter assembly **350,** the interface element **330,** the seat element **340,** the cover element **315,** the rain cover element **355,** the plurality of support bars **357,** the stem guide **360** and the sleeve **365.**

Conversely, a modified connection valve portion **470c** of the vacuum relief valve **400c** comprises an additional cover element **315"** that is coupled with the border **120c** of the first valve body **100** (in a similar manner to that described above).

The vacuum relief valve **400c** is adapted to suck air from the outside when a pressure inside the tank falls below the predetermined minimum value (as described above with respect to the vacuum relief valve portion **375** of the breather valve **300**).

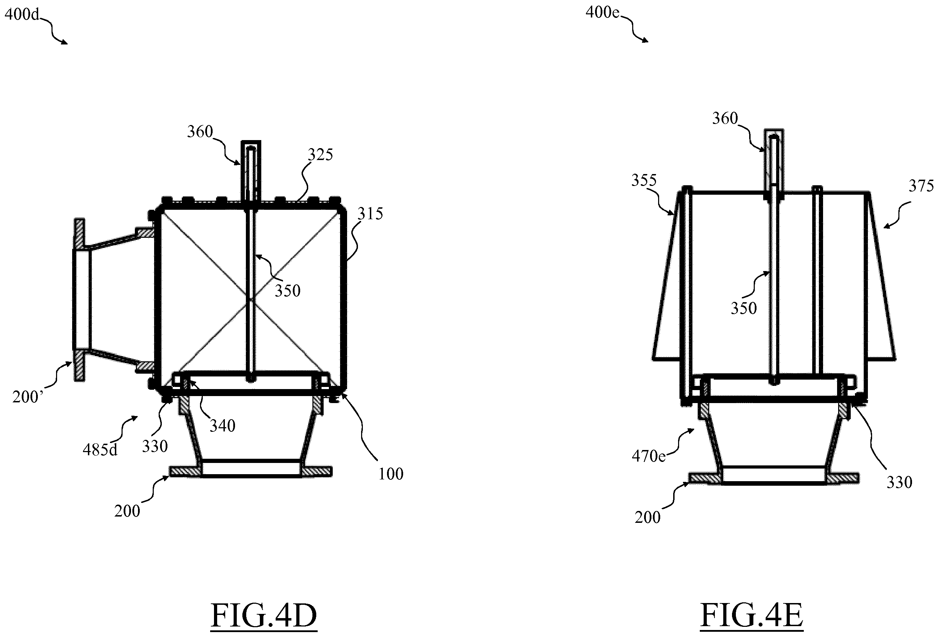

The safety valve shown in **Figure 4D** is a pressure relief safety valve, or simply pressure relief valve **400d,** and differs from the breather valve **300** as follows.

The pressure valve **400d** does not comprise the vacuum relief valve portion **375;** i.e., the pressure valve **400d** does not comprise the second valve body **100',** the shutter assembly **350',** the interface element **330',** the seat element **340',** the cover element **315',** the rain cover element **355,** the plurality of support rods **357,** the stem guide **360'** and the sleeve **365'.** Conversely, the pressure valve **400d** comprises a additional flanged coupling element **200',** for being coupled with a pipe (or a further tank not shown).

In the pressure valve **400d** pressure relief valve portion and the connection valve portion are combined in a hybrid portion **485d** that serves as both as connection valve portion and pressure relief valve portion.

In this case, the additional coupling flanged element **200'** is coupled with the pipe (or the further tank not shown) for venting a fluid from the tank into the pipe. The interface element **330** is interposed between the flanged coupling element **200** and the border **120d** of the valve body **100** and is coupled with both. The seat element **340** is coupled with the interface **330** as described above. The additional flanged coupling element **200'** is coupled with the border **120a** of the valve body **100.** The cover **315** is coupled with the border **120b** so as to block the opening **120b** (as described above). The perforated cover element **325** is coupled with the border **120c** of the valve body **100** (as described above). The stem guide **360** is coupled with the perforated cover element **325** (as described above). In this case, the shutter assembly **350** is contained in the valve body **100.**

The pressure relief valve **400d** is adapted to vent the fluid from the tank coupled with the valve body **100** via the flanged coupling element **200** and input it into the pipe coupled with the additional flanged coupling element **200'** when the value of the pressure inside the tank equals or exceeds the predetermined maximum value.

The safety valve shown in **Figure 4E** is a pressure relief safety valve, or simply pressure relief valve **400e,** and differs from the breather valve **300** as follows.

The pressure relief valve **400e** does not comprise the vacuum relief valve portion **375;** i.e. the pressure valve **400e** does not comprise the second valve body **100',** the shutter assembly **350',** the interface element **330',** the seat element **340',** the cover elements **315** and **315',** the stem guide **360'** and sleeve **365'.**

Moreover, the pressure valve **400e** comprises a modified connection valve portion **470e** (replacing the connection valve portion **370**) that does not comprise the valve body **100.**

In the pressure valve **400e** the interface element **330** is coupled with the flanged coupling element **200** with the seat element **340** coupled with the interface **330** as described above. The rain cover element **355** is coupled with the interface **330** via a plurality of support bars **357** as described above. The stem guide **360** is coupled with the rain cover **355** as described above.

In this case, when within the tank the pressure in the tank increases to a value equal to, or greater than a predetermined maximum pressure value the shutter assembly **350** moves away from the seat element **340** (with the stem that slides along the cavity **360a** of the stem guide **360**), thereby allowing the pressurized fluid to escape from the tank through the cavity **355a** of the rain cover element **355** and to reach the external environment through the opened larger base of the rain cover element **355.**

Naturally, the types and configurations of safety valves attainable by combining one or more valve bodies, such as the valve body **100** and the valve elements described above are not limited to the examples above. In fact, in an alternative embodiment (not shown), a safety valve comprising more than a pressure relief valve portion is provided. In another embodiment (not shown), is provided a vacuum relief or breather valve adapted to suck and/or vent fluid from one or more pipes to which is coupled by means of corresponding additional flanged coupling elements. In general, safety valves according to embodiments of the present invention may comprise any number of connection portions, valve bodies, flanged coupling elements, defining in the complex any number of interconnected pressure and/or vacuum relief valve portions.

In alternative safety valves according to the present invention there is provided an elastic biasing arrangement for the shutter adapted to define a maximum or minimum value of the pressure acting on the shutter assembly against the force exerted by the pressure in the tank on the same in combination with, or independently of, the weight force of the shutter assembly.

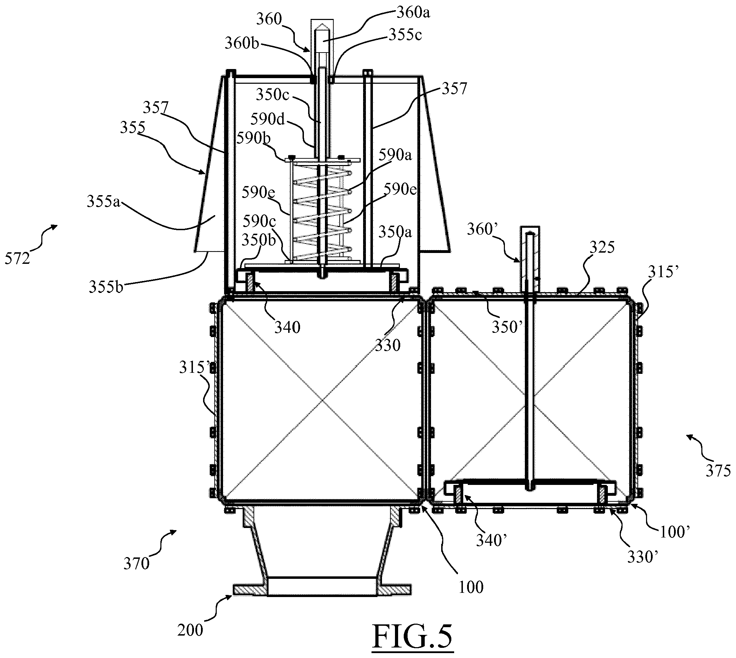

With reference to **Figure 5****,** it is a side sectional view of a breather safety valve, simply breather valve **500** in the following, according to another embodiment of the present invention.

The breather valve **500** differs from the breather valve **300** as follows.

The breather valve **500** comprises a modified pressure relief valve portion **572,** which is equipped with an elastic biasing arrangement **590** adapted to act on the shutter assembly **350** against the force exerted by the pressure in the tank thereon.

The elastic biasing arrangement **590** comprises an elastically deformable element, such as a spring **590a** (for example a helical compression spring), adapted to provide a resisting force that opposes the force exerted by the pressure in the tank, a first and a second base **590b** and **590c** (for example, disk-shaped) adapted to be coupled with opposite ends of the spring **590a** in order to form a spring arrangement, a spacer element **590d,** for example a tube, adapted to maintain the spring arrangement in a predetermined position (as described in the following).

The spacer element **590d** has an elongated shape, preferably cylindrical and is coupled with the block spring with one end of the spacer element **590d** coupled with one of the bases **590b** and **590c,** for example, the base **590b.**

The elastic biasing arrangement **590** is adapted to slidably receive any one of the stems **350c** and **350c'.** For example, in the breather valve **500** the elastic biasing arrangement **590** is slidably coupled with the stem **350c** of the shutter assembly **350.** For this purpose the bases **590b** and **590c** each comprise a through hole adapted to slidably receive the stem **350c.** In a similar manner, the spacer element **590d** comprises a cavity adapted to slidably receive the stem **350c.**

The stem **350c** is inserted into the through holes of the bases **590b** and **590c** and in the cavity of the spacer **590d,** with the base element **590c** of the elastic biasing arrangement **590** that rests on the shutter **350a.** A free end of the spacer element **590d** is coupled with the stem guide **360.** For example, the spacer element **590d** is adapted to be inserted into the cavity **360a** of the stem guide **360.**

In one embodiment according to the present invention, the spring arrangement comprises one or more tie-beams **590e** (for example three, of which only two are visible in **Figure 5**) adapted to maintain the spring **590a** in a partially compressed, or pre-stressed, or pre-loaded condition so as to adapt the resisting force produced by the spring **590a** to implementation needs. This allows to use a generic spring **590a** to provide a desired resistant force by simply adjusting the tie-beams **590a** thus removing the need to provide springs specially designed for different implementations.

In one embodiment, the tie-beams **590e** are rigid bars (for example in metallic material) coupled by their opposite ends to the bases **590b** and **590a** so as to maintain a predetermined maximum distance between the latter. The tie-beams **590e** are coupled in a fastened manner with the base **590c** - for example, the tie-beams **590e** each comprises a first threaded end, not shown, screwed to a respective threaded hole in the base **590c,** not shown - while they are slidably coupled with the base **590b** - for example, each of the **590e** rods inserted in the corresponding through hole provided on the basis **590b.** Each tie-beam **590e** comprises a respective head element (such as a nut screwed to a second end of the tie-beam **590e** opposite to first threaded end thereof) adapted to prevent a decoupling between the rods **590d** and the base **590b** due to the elastic force of the compressed spring **590e.**

In the configuration just described, in a rest condition of the elastic biasing arrangement **590,** the tie-beams **590e** maintain the bases **590b** and **590c** at a predetermined distance, substantially corresponding to a length of the tie-beams **590e.** In this condition, the spring **590a** is kept compressed - or pre-compressed - to such a predetermined distance.

The breather valve **500** is coupled with a fluid tank (not shown), and is in this case used to stabilize a pressure thereof in a similar manner to that described above. In this case, the shutter assembly **350** moves away from the seat element **340,** freeing the vent opening **340c,** when a pressure inside the tank and the valve bodies **100** and **100'** reaches a value equal to, or higher than, a predetermined maximum pressure value which substantially exerts a force on the shutter assembly **350** that exceed the sum of the weight force of the shutter assembly **350** and of the resisting force defined by the spring **590** of the elastic biasing arrangement **590.** The shutter assembly **350** is maintained separated by the seat element **340c** until the pressure in the tank generates a force on the shutter assembly **350,** able to overcome the weight force of the shutter assembly **350** and the resistant force defined by the spring **590a.**

While the shutter assembly **350** is spaced apart from the seat element **340** the spring **590a** is compressed. In detail, the base **590d** preferably integral with the shutter **350a** approaches the base **590c,** which is maintained in position by the spacer element **590d,** with the tie-beams **590e** that slide through the holes in the base **590b.**

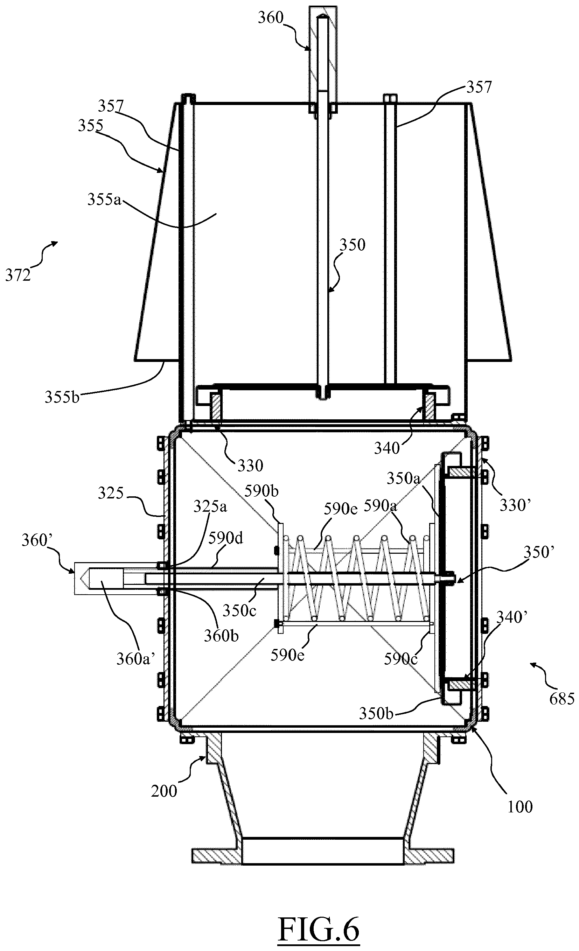

**Figure 6** is a side sectional view of a breather safety valve, simply breather valve **600** in the following, according to a different embodiment of the present invention.

The breather valve **600** differs from the breather valve **300** as follows.

The breather valve **600** does not comprise the second valve body **100',** and the cover elements **315** and **315'.** The breather valve **600** comprises instead the elastic biasing arrangement **590.**

The breather valve **600** comprises the pressure relief valve portion **372** described above while a vacuum and a connection valve portions are combined in a hybrid portion **685.** The interface element **330'** is coupled with the border **120b** of the valve body **100** (thus with a transversal orientation with respect to the first interface element **330**). The seat element **340'** is coupled with the interface **330'** as described above. The perforated cover element **325** is coupled with the border **120a** of the valve body **100** (as described above). The stem guide **360'** is coupled with the perforated cover element **325** (as described above).

In this case, the shutter assembly **350'** is contained in the valve body **100** and is coupled with the spring bias **590,** with the stem **350c'** slidably coupled with the elastic biasing arrangement **590** (in the same way as described above). As in the previous case, the spacer element **590d** is coupled through one of its ends (in a position opposite to the spring arrangement of the spacer element **590d**) with the stem guide **360'.**

In the breather valve **600** the shutter assemblies **350** and **350'** are arranged transversely one with respect to the other. For example, in use the shutter element **350'** is provided substantially transversal to the direction of the weight force. In this case, the elastic biasing arrangement **590** allows the vacuum relief valve portion of the breather valve **600** operating correctly without exploiting the weight force of the shutter assembly **350'** in order to keep the latter in abutment against the seat element **340'** (i.e., in the closed position).

During operation, the shutter assembly **350'** moves away from the seat element **340',** freeing the suction opening **340c',** when a pressure inside the tank and the valve body **100** drops to a value equal to, or lower than, a predetermined minimum pressure value that determines a difference between the pressure inside the tank and the pressure of the external environment has a value such that the pressure of the external environment exerts a force on the shutter **350'** stronger than the resisting force defined by the spring **590a** of the elastic biasing arrangement **590.** In other words, the vacuum generated inside the tank reaches a value such that actuates the shutter assembly **350'.**

Thanks to the elastic biasing arrangement **590** the shutter assembly **350** may be provided in the breather valve **600** regardless of the direction of the gravity acceleration. In this way, it is possible to obtain the breather valve **600** having an extremely compact structure.

In conclusion, thanks to the valve body **100** according to the present invention it is possible to provide safety valves of many different types and configurations, suitable for different implementation requirements. In addition, the safety valves according to the present invention, thanks to the modularity of the valve body **100** and of the valve elements (i.e., the flanged coupling element **200,** the shutter assembly **350,** the interface element **330,** the seat element **340,** the cover member **315,** the perforated cover element **325** and the hollow stem guide **360**), have a structure simply modifiable and adaptable to possibly changing requirements of hydraulic system in which they are implemented. For the same reason, maintaining and/or repairing operations on the safety valves according to the present invention are particularly effective, quick and cost-effective (for example, in case of failure it is possible to replace only the damaged valve element/s).

Obviously, the valve body **100** and each of the valve elements described above can be provided to third parties (for example, marketed) in a completely independent way from each other.

## Claims

1. A safety valve (300; 400a; 400b, 400c, 400d, 400e; 500; 600) adapted to be coupled to a tank of fluid to adjust a pressure in the tank, the safety valve comprising a coupling portion (370; 485d; 685) for fluidly coupling the valve with the tank of fluid, and at least one pressure relief valve portion (372; 572; 485d) adapted to reduce an over-pressure in the tank when the pressure in the tank equals or exceeds a maximum pressure value and/or at least one vacuum relief valve portion (375; 480; 685) adapted to allow in the tank a vacuum-compensating fluid when the pressure in the tank equals or falls below a minimum pressure value, **characterized in that** at least one among the connecting portion, the pressure relief valve portion and/or the vacuum relief valve portion comprises at least one valve body (100, 100', 100"), the valve body defining a cavity (105) inside the valve body, the valve body comprising:
a plurality of openings (**110a**, **110b**, **110c**, **110d**) provided in the valve body (**100**) to allow accessing the internal cavity of the valve body, at least two openings (**110a**, **110b**, **110c**, **110d**) of said plurality of openings being provided on the valve body in such a way to lie on substantially parallel planes one with respect to the other, and
a plurality of mechanical coupling portions (**120a, 120b, 120c, 120d**), each mechanical coupling portion being provided in correspondence of a respective one of said at least two openings of the valve body and adapted to couple with a corresponding coupling portion of a further valve body, each mechanical coupling portion comprising a respective border (**120a, 120b, 120c, 120d**) adapted to delimit a corresponding opening of said at least two openings, each border comprising a plurality of coupling elements (**125**) for coupling with a corresponding plurality of coupling elements comprised in a corresponding border of the further valve body, wherein:
-- the valve body has a box-like structure generally prism-shaped with a quadrangular base, and wherein said at least two openings include four openings provided on four of the six faces of the prism with a quadrangular base; further **characterized in that**
- the valve body has a groin-vault structure comprising a first wall (**115a**) and a second wall (**115b**) each with a groin-vault structure, and each comprising four perimetric arcs, the first and second walls being connected together with each perimetric arc of the first wall that is coupled with a corresponding perimetric arc of the second wall defining an outer perimeter of a corresponding opening of said at least two openings.

2. The safety valve according to claim 1, wherein said at least two openings are substantially coaxial one with the other.

3. The safety valve according to any one of the preceding claims 1 to 2, wherein the plurality of coupling elements (**125**) comprises a plurality of holes, through holes, threaded holes and/or threaded through holes.

4. A safety valve according to any of claims 1 to 3, wherein the connecting portion comprises a coupling flanged element (**200**) having a first coupling flange (**205**) adapted to couple with a filler of the tank and a second coupling flange (**210**) coupled to a selected one of said mechanical coupling portions of said at least one valve body.

5. A safety valve according to any of claims 1 to 4, wherein the pressure relief valve portion comprises a body (**355, 100", 100**) containing a shutter assembly (**350**) comprising a shutter element (**350a**) movable under the action of the pressure in the tank between a closed position in which closes a vent opening (**340c**) of the pressure relief valve portion and an open position in which frees the vent opening, the body of the pressure relief valve portion comprising said at least one valve body, or
the body of the pressure relief valve portion comprising a rain-cover element (355) having a cavity (355a) for housing the shutter assembly protecting it from weathering.

6. A safety valve according to any of claims 1 to 5, wherein the vacuum relief valve portion comprises said at least one valve body and a shutter assembly (**350**') comprising a shutter element (**350a**') movable under the action of the vacuum in the tank between a closed position in which closes a suction opening (**340c'**) of the vacuum relief valve portion and an open position in which frees the suction opening.

7. A safety valve according to any of claims 5 to 6, wherein the pressure relief valve portion and/or the vacuum relief valve portion comprise an additional coupling flanged element (**200**') comprising a first coupling flange (**205**') adapted to couple with a pipe to provide/receive a fluid and a second coupling flange (**210**') coupled to a selected one of said mechanical coupling portions of said at least one valve body.

8. A safety valve according to any of claims 5 to 7, further comprising an elastic biasing arrangement (590) coupled with the shutter assembly for providing a resisting force that opposes to the action of the pressure or vacuum in the tank.

9. A safety valve according to claim 8, wherein the elastic biasing arrangement (**590**) comprises an elastically deformable element (**590a**), a first base (**590b**) and a second base (**590c**) coupled to opposite ends of the elastically deformable element, at least one tie-beam (**590e**) coupled through respective opposite ends to the first and second base so as to maintain a predetermined maximum distance between the latter, the at least one tie-beam being coupled in a bounded manner with the second base and being coupled in a sliding manner with the first base to maintain a pre-charged compression of the elastically deformable element, and wherein
the elastic biasing arrangement is coupled in a sliding manner to the shutter element with the second base of the elastic biasing arrangement that rests on the shutter.

10. A safety valve according to claim 8 or 9, wherein the shutter assembly is arranged to move under the action of pressure or vacuum in the tank along a direction transversal to a direction of the force of gravity.

11. A safety valve according to any of claims 1 to 10, wherein the coupling portion and the pressure relief valve portion or the vacuum relief valve portion share said at least one valve body.

12. A safety valve according to any of claims 1 to 11, wherein the at least one vacuum relief valve portion (**375; 480; 685**) comprises two vacuum relief valve portion (**375; 480**), and the safety valve further comprises a septum element (**705**) provided in the coupling portion (**370; 485d; 685**) for subdividing the safety valve in a first region (**710a**) comprising a first one vacuum relief valve portion (**375**) of the two vacuum relief valve portions (**375; 480**) and a second region (**710b**) comprising a second one vacuum relief valve portion (**480**) of the two vacuum relief valve portions (**375; 480**), the first region (**710a**) and the second region (**710b**) being substantially symmetrical.

13. A safety valve according to any of claims 6 to 11, wherein the at least one vacuum relief valve portion (**375; 480; 685**) comprises two vacuum relief valve portions (**375; 480**), said two vacuum relief valve portion (**375; 480**), and the safety valve further comprises coupling element (**715**) adapted to couple together the shutter assemblies (**350', 350**") of the two vacuum relief valve portions (**375; 480**).

14. kit of components for the manufacturing of a safety valve according to any of claims 1-13 for adjusting a pressure in a tank of fluid to which the safety valve is coupled, the kit of components comprising:
- at least one valve body (**100, 100', 100**")
- at least one coupling flanged element (**200, 200**') having a first coupling flange (**205**), adapted to couple with a filler of the tank or with a flange of a pipe, and a second coupling flange (**210**) adapted to couple with the valve body,
- at least one cover element (**315**) for plugging any one of the openings (**110a, 110b, 110c, 110d**) provided on the valve body,
- at least one rain-cover element (**355**) internally hollow and adapted to be mounted on the at least one valve body in correspondence of an opening of said at least two openings,
- at least one shutter assembly (**350**) mountable in the at least one valve body or in the rain-cover element and adapted to selectively close one opening of said at least two openings of the valve body, the shutter assembly comprising a movable shutter (**350a**) adapted to close said one opening.

## Patentansprüche

1. Sicherheitsventil (300; 400a; 400b, 400c, 400d, 400e; 500; 600), das dazu ausgebildet ist, mit einem Fluidtank gekoppelt zu werden, um einen Druck in dem Tank einzustellen, wobei das Sicherheitsventil aufweist: einen Kopplungsbereich (370; 485d; 685) zum fluidmäßigen Koppeln des Ventils mit dem Fluidtank sowie mindestens einen Druckentlastungsventilbereich (372; 572; 485d), der zum Reduzieren eines Überdrucks in dem Tank ausgebildet ist, wenn der Druck in dem Tank gleich einem oder höher als ein maximaler Druckwert ist, und/oder mindestens einen Vakuumentlastungsventilbereich (375; 480; 685), der dazu ausgebildet ist, ein Vakuumkompensationsfluid in dem Tank zuzulassen, wenn der Druck in dem Tank gleich einem oder niedriger als ein minimaler Druckwert ist,
**dadurch gekennzeichnet, dass** mindestens einer von dem Verbindungsbereich, dem Überdruckentlastungsventilbereich und/oder dem Vakuumentlastungsventilbereich mindestens einen Ventilkörper (100, 100', 100") aufweist, wobei der Ventilkörper einen Hohlraum (105) im Inneren des Ventilkörpers bildet, wobei der Ventilkörper aufweist:
eine Mehrzahl von Öffnungen (110a, 110b, 110c, 110d), die in dem Ventilkörper (100) vorgesehen sind, um den Zugang zu dem inneren Hohlraum des Ventilkörpers zu ermöglichen, wobei mindestens zwei Öffnungen (110a, 110b, 110c, 110d) der Mehrzahl von Öffnungen an dem Ventilkörper derart vorgesehen sind, dass sie im Wesentlichen in parallelen Ebenen relativ zueinander liegen, und
eine Mehrzahl von mechanischen Kopplungsbereichen (120a, 120b, 120c, 120d), wobei jeder mechanische Kopplungsbereich in Entsprechung zu einer jeweiligen der mindestens zwei Öffnungen des Ventilkörpers vorgesehen ist und zur Kopplung mit einem entsprechenden Kopplungsbereich eines weiteren Ventilkörpers ausgebildet ist, wobei jeder mechanische Kopplungsbereich einen jeweiligen Rand (120a, 120b, 120c, 120d) aufweist, der zum Begrenzen einer entsprechenden Öffnung der mindestens zwei Öffnungen ausgebildet ist, wobei jeder Rand eine Mehrzahl von Kopplungselementen (125) zur Kopplung mit einer entsprechenden Mehrzahl von Kopplungselementen aufweist, die in einem entsprechenden Rand des weiteren Ventilkörpers vorhanden sind,
wobei der Ventilkörper eine kastenartige Struktur aufweist, die im Allgemeinen prismenförmig mit einer viereckigen Basis ist, und wobei die mindestens zwei Öffnungen vier Öffnungen umfassen, die an vier der sechs Seiten des Prismas mit einer viereckigen Basis vorgesehen sind;
weiterhin **dadurch gekennzeichnet,**
**dass** der Ventilkörper eine Kreuzgewölbestruktur mit einer ersten Wand (115a) und einer zweiten Wand (115b) jeweils mit Kreuzgewölbestruktur und jeweils mit vier Umfangsbögen aufweist, wobei die erste und die zweite Wand miteinander verbunden sind und jeder Umfangsbogen der ersten Wand, der mit einem entsprechenden Umfangsbogen der zweiten Wand verbunden ist, einen Außenumfang einer entsprechenden Öffnung der mindestens zwei Öffnungen bildet.

2. Sicherheitsventil nach Anspruch 1,
wobei die mindestens zwei Öffnungen im Wesentlichen koaxial zueinander sind.

3. Sicherheitsventil nach einem der vorhergehenden Ansprüche 1 bis 2, wobei die Mehrzahl von Kopplungselementen (125) eine Mehrzahl von Löchern, Durchgangsöffnungen, Gewindeöffnungen und/oder mit Gewinde versehenen Durchgangsöffnungen aufweist.

4. Sicherheitsventil nach einem der Ansprüche 1 bis 3,
wobei der Verbindungsbereich ein Kopplungsflanschelement (200) aufweist, das einen ersten Kopplungsflansch (205), der zur Kopplung mit einem Füllstück des Tanks ausgebildet ist, und einen zweiten Kopplungsflansch (210) aufweist, der mit einem ausgewählten der mechanischen Kopplungsbereiche des mindestens einen Ventilkörpers gekoppelt ist.

5. Sicherheitsventil nach einem der Ansprüche 1 bis 4,
wobei der Druckentlastungsventilbereich einen Körper (355, 100", 100) aufweist, der eine Verschlussanordnung (350) mit einem Verschlusselement (350a) enthält, das unter der Wirkung des Drucks in dem Tank zwischen einer geschlossenen Position, in der eine Entlüftungsöffnung (340c) des Druckentlastungsventilbereichs geschlossen ist, und einer offenen Position, in der die Entlüftungsöffnung freigegeben ist, bewegbar ist,
wobei der Körper des Druckentlastungsventilbereichs den mindestens einen Ventilkörper aufweist, oder
wobei der Körper des Druckentlastungsventilbereichs ein Regenschutzelement (355) mit einem Hohlraum (355a) zum Unterbringen der Verschlussanordnung aufweist, um diese vor Witterungseinflüssen zu schützen.

6. Sicherheitsventil nach einem der Ansprüche 1 bis 5,
wobei der Vakuumentlastungsventilbereich den mindestens einen Ventilkörper und eine Verschlussanordnung (350') mit einem Verschlusselement (350a') aufweist, das unter der Wirkung des Vakuums in dem Tank zwischen einer geschlossenen Position, in der eine Ansaugöffnung (340c') des Vakuumentlastungsventilbereichs geschlossen ist, und einer offenen Position, in der die Ansaugöffnung freigegeben ist, bewegbar ist.

7. Sicherheitsventil nach einem der Ansprüche 5 bis 6,
wobei der Druckentlastungsventilbereich und/oder der Vakuumentlastungsventilbereich ein zusätzliches Kopplungsflanschelement (200') aufweisen, das einen ersten Kupplungsflansch (205'), der zum Koppeln mit einem Rohr zum Bereitstellen/Empfangen eines Fluids ausgebildet ist, und einen zweiten Kopplungsflansch (210') aufweist, der mit einem ausgewählten der mechanischen Kopplungsbereiche des mindestens einen Ventilkörpers gekoppelt ist.

8. Sicherheitsventil nach einem der Ansprüche 5 bis 7,
das weiterhin eine elastische Vorspannanordnung (590) aufweist, die mit der Verschlussanordnung gekoppelt ist, um eine Widerstandskraft bereitzustellen, die der Wirkung des Drucks oder des Vakuums in dem Tank entgegenwirkt.

9. Sicherheitsventil nach Anspruch 8,
wobei die elastische Vorspannanordnung (590) aufweist: ein elastisch verformbares Element (590a), eine erste Basis (590b) und eine zweite Basis (590c), die mit gegenüberliegenden Enden des elastisch verformbaren Elements verbunden sind, mindestens eine Verbindungsstange (590e), die durch jeweilige gegenüberliegende Enden mit der ersten und der zweiten Basis gekoppelt ist, um einen vorbestimmten maximalen Abstand zwischen letzteren aufrechtzuerhalten, wobei die mindestens eine Verbindungsstange mit der zweiten Basis in festgelegter Weise gekoppelt ist und mit der ersten Basis gleitend verschiebbar gekoppelt ist, um eine vorgespannte Kompression des elastisch verformbaren Elements aufrechtzuerhalten, und wobei die elastische Vorspannanordnung mit dem Verschlusselement an der an dem Verschluss anliegenden zweiten Basis der elastischen Vorspannanordnung gleitend verschiebbar gekoppelt ist.

10. Sicherheitsventil nach Anspruch 8 oder 9,
wobei die Verschlussanordnung dazu ausgebildet ist, sich unter der Wirkung von Druck oder Vakuum in dem Tank entlang einer Richtung quer zu einer Richtung der Schwerkraft zu bewegen.

11. Sicherheitsventil nach einem der Ansprüche 1 bis 10,
wobei sich der Kopplungsbereich und der Druckentlastungsventilbereich oder der Vakuumentlastungsventilbereich den mindestens einen Ventilkörper teilen.

12. Sicherheitsventil nach einem der Ansprüche 1 bis 11,
wobei der mindestens eine Vakuumentlastungsventilbereich (375; 480; 685) zwei Vakuumentlastungsventilbereiche (375, 480) umfasst und das Sicherheitsventil ferner ein Trennwandelement (705) aufweist, das in dem Kopplungsbereich (370; 485d; 685) vorgesehen ist, um das Sicherheitsventil in eine erste Region (710a), die einen ersten Vakuumentlastungsventilbereich (375) der zwei Vakuumentlastungsventilbereiche (375, 480) umfasst, und eine zweite Region (710b), die einen zweiten Vakuumentlastungsventilbereich (480) von den beiden Vakuumentlastungsventilbereichen (375, 480) umfasst, zu unterteilen, wobei die erste Region (710a) und die zweite Region (710b) im Wesentlichen symmetrisch sind.

13. Sicherheitsventil nach einem der Ansprüche 6 bis 11,
wobei der mindestens eine Vakuumentlastungsventilbereich (375; 480; 685) zwei Vakuumentlastungsventilbereiche (375; 480) umfasst, und wobei das Sicherheitsventil ferner ein Kopplungselement (715) aufweist, das dazu ausgebildet ist, die Verschlussanordnungen (350', 350") der beiden Vakuumentlastungsventilbereiche (375; 480) miteinander zu koppeln.

14. Satz von Bauteilen zur Herstellung eines Sicherheitsventils nach einem der Ansprüche 1 bis 13 zum Einstellen eines Drucks in einem Fluidtank, mit dem das Sicherheitsventil gekoppelt ist, wobei der Satz von Bauteilen aufweist:
- mindestens einen Ventilkörper (100, 100', 100"),
- mindestens ein Kopplungsflanschelement (200, 200') mit einem ersten Kopplungsflansch (205), der zur Kopplung mit einem Füllstück des Tanks oder mit einem Flansch eines Rohrs ausgebildet ist, und mit einem zweiten Kopplungsflansch (210), der zur Kopplung mit dem Ventilkörper ausgebildet ist,
- mindestens ein Abdeckelement (315) zum Verschließen einer jeglichen der Öffnungen (110a, 110b, 110c, 110d), die an dem Ventilkörper vorgesehen sind,
- mindestens ein Regenschutzelement (355), das innen hohl ist und dazu ausgebildet ist, an dem mindestens einen Ventilkörper entsprechend einer Öffnung der mindestens zwei Öffnungen angebracht zu werden,
- mindestens eine Verschlussanordnung (350), die in dem mindestens einen Ventilkörper oder in dem Regenschutzelement anbringbar ist und dazu ausgebildet ist, eine Öffnung der mindestens zwei Öffnungen des Ventilkörpers selektiv zu verschließen, wobei die Verschlussanordnung einen beweglichen Verschluss (350a) aufweist, der zum Verschließen der einen Öffnung ausgebildet ist.

## Revendications

1. Soupape de sécurité (300 ; 400a ; 400b, 400c, 400d, 400e ; 500 ; 600) adaptée à être couplée à un réservoir de fluide pour ajuster une pression dans le réservoir, la soupape de sécurité comprenant une partie d'accouplement (370 ; 485d ; 685) pour coupler en ce qui concerne un fluide la soupape au réservoir de fluide, et au moins une partie de soupape de libération de pression (372 ; 572 ; 485d) adaptée à réduire une surpression dans le réservoir lorsque la pression dans le réservoir égale ou dépasse une valeur de pression maximale et/ou au moins une partie de soupape de libération de pression (375 ; 480 ; 685) adaptée à laisser entrer dans le réservoir un fluide de compensation de vide lorsque la pression dans le réservoir égale ou descend en dessous d'une valeur de pression minimale, **caractérisée en ce qu'**au moins l'une parmi la partie de connexion, la partie de soupape de libération de pression et/ou la partie de soupape de libération de vide comprend au moins un corps de soupape (100, 100', 100"), le corps de soupape définissant une cavité (105) à l'intérieur du corps de soupape, le corps de soupape comprenant :
une pluralité d'ouvertures (110a, 110b, 110c, 110d) prévues dans le corps de soupape (100) pour permettre un accès à la cavité interne du corps de soupape, au moins deux ouvertures (110a, 110b, 110c, 110d) de la pluralité d'ouvertures étant prévues sur le corps de soupape de manière à reposer sur des plans sensiblement parallèles entre eux, et
une pluralité de parties d'accouplement mécanique (120a, 120b, 120c, 120d), chaque partie d'accouplement mécanique étant prévue en correspondance avec l'une respective desdites au moins deux ouvertures du corps de soupape et adaptée à se coupler avec une partie d'accouplement correspondante d'un autre corps de soupape, chaque partie d'accouplement mécanique comprenant une frontière respective (120a, 120b, 120c, 120d) adaptée à délimiter une ouverture correspondante desdites au moins deux ouvertures, chaque frontière comprenant une pluralité d'éléments d'accouplement (125) pour se coupler avec une pluralité correspondante d'éléments d'accouplement compris dans une frontière correspondante de l'autre corps de soupape, dans lequel :
- le corps de soupape a une structure similaire à une boîte ayant une forme générale de prisme avec une base quadrangulaire, et dans lequel lesdites au moins deux ouvertures comprennent quatre ouvertures prévues sur quatre des six faces du prisme avec une base quadrangulaire ;
**caractérisée en outre en ce que**
- le corps de soupape a une structure en voûte d'arrêtes comprenant une première paroi (115a) et une deuxième paroi (115b) ayant chacune une structure en voûte d'arrêtes, et comprenant chacune quatre arcs périmétriques, les première et deuxième parois étant connectées ensemble avec chaque arc périmétrique de la première paroi qui est couplé avec un arc périmétrique correspondant de la deuxième paroi définissant un périmètre extérieur d'une ouverture correspondante desdites au moins deux ouvertures.

2. Soupape de sécurité selon la revendication 1, dans laquelle lesdites au moins deux ouvertures sont sensiblement coaxiales entre elles.

3. Soupape de sécurité selon l'une quelconque des revendications précédentes 1 à 2, dans laquelle la pluralité d'éléments d'accouplement (125) comprend une pluralité de trous, de trous traversants, de trous filetés et de trous traversants filetés.

4. Soupape de sécurité selon l'une quelconque des revendications 1 à 3, dans laquelle la partie de connexion comprend un élément à bride d'accouplement (200) comportant une première bride d'accouplement (205) adaptée à se coupler avec un élément de remplissage du réservoir et une deuxième bride d'accouplement (210) couplée à l'une sélectionnée des parties d'accouplement mécanique dudit au moins un corps de soupape.

5. Soupape de sécurité selon l'une quelconque des revendications 1 à 4, dans laquelle la partie de soupape de libération de pression comprend un corps (355, 100", 100) comprenant un ensemble obturateur (350) comprenant un élément d'obturateur (350a) mobile sous l'action de la pression dans le réservoir entre une position fermée dans laquelle il ferme une ouverture d'évent (340c) de la partie de soupape de libération de pression et une position ouverte dans laquelle il libère l'ouverture d'évent,
le corps de la partie de soupape de libération de pression comprenant ledit au moins un corps de soupape, ou
le corps de la partie de soupape de libération de pression comprenant un élément de protection contre la pluie (355) comportant une cavité (355a) pour loger l'ensemble obturateur et le protéger des intempéries.

6. Soupape de sécurité selon l'une quelconque des revendications 1 à 5, dans laquelle la partie de soupape de libération de vide comprend ledit au moins un corps de soupape et un ensemble obturateur (350') comprenant un élément d'obturateur (350a') mobile sous l'action du vide dans le réservoir entre une position fermée dans laquelle il ferme une ouverture d'aspiration (340c') de la partie de soupape de libération de vide et une position ouverte dans laquelle il libère l'ouverture d'aspiration.

7. Soupape de sécurité selon l'une quelconque des revendications 5 à 6, dans laquelle la partie de soupape de libération de pression et/ou la partie de soupape de libération de vide comprend un élément à bride d'accouplement additionnel (200') comprenant une première bride d'accouplement (205') adaptée à se coupler avec un tuyau pour fournir/recevoir un fluide et une deuxième bride d'accouplement (210') couplée à l'une sélectionnée des parties d'accouplement mécanique dudit au moins un corps de soupape.

8. Soupape de sécurité selon l'une quelconque des revendications 5 à 7, comprenant en outre un agencement de sollicitation élastique (590) couplé avec l'ensemble obturateur pour fournir une force de résistance qui s'oppose à l'action de la pression ou du vide dans le réservoir.

9. Soupape de sécurité selon la revendication 8, dans laquelle l'agencement de sollicitation élastique (590) comprend un élément déformable de manière élastique (590a), une première base (590b) et une deuxième base (590c) couplées à des extrémités opposées de l'élément déformable de manière élastique, au moins une barre centrale (590e) couplée par l'intermédiaire d'extrémités opposées respectives aux première et deuxième bases afin de maintenir une distance maximum prédéterminée entre celles-ci, ladite au moins une barre centrale étant couplée de manière limitée à la deuxième base et étant couplée de manière coulissante à la première base pour maintenir une compression pré-chargée de l'élément déformable de manière élastique, et dans laquelle
l'agencement de sollicitation élastique est couplé de manière coulissante à l'élément d'obturateur avec la seconde base de l'agencement de sollicitation élastique qui repose sur l'obturateur.

10. Soupape de sécurité selon la revendication 8 ou 9, dans laquelle l'ensemble obturateur est agencé pour se déplacer sous l'action de la pression ou du vide dans le réservoir suivant une direction transversale à la direction de la force de gravité.

11. Soupape de sécurité selon l'une quelconque des revendications 1 à 10, dans laquelle la partie d'accouplement et la partie de soupape de libération de pression ou la partie de soupape de libération de vide partagent ledit au moins un corps de soupape.

12. Soupape de sécurité selon l'une quelconque des revendications 1 à 11, dans laquelle ladite au moins une partie de soupape de libération de vide (375 ; 480 ; 685) comprend deux parties de soupape de libération de vide (375 ; 480), et la soupape de sécurité comprend en outre un élément formant cloison (705) prévu dans la partie d'accouplement (370 ; 485d ; 685) pour subdiviser la soupape de sécurité en une première région (710a) comprenant une première partie de soupape de libération de vide (375) des deux parties de soupape de libération de vide (375 ; 480) et une deuxième région (710b) comprenant une deuxième partie de soupape de libération de vide (480) des deux parties de soupape de libération de vide (375 ; 480), la première région (710a) et la deuxième région (710b) étant sensiblement symétriques.

13. Soupape de sécurité selon l'une quelconque des revendications 6 à 11, dans laquelle ladite au moins une partie de soupape de libération de vide (375 ; 480 ; 685) comprend deux parties de soupape de libération de vide (375 ; 480), les deux parties de soupape de libération de vide (375 ; 480), et la soupape de sécurité comprennent en outre un élément d'accouplement (715) adapté à coupler entre eux les ensembles obturateurs (350', 350") des deux parties de soupape de libération de vide (375 ; 480).

14. Kit de composants pour la fabrication d'une soupape de sécurité selon l'une quelconque des revendications 1 à 13 pour ajuster une pression dans un réservoir de fluide auquel la soupape de sécurité est couplée, le kit de composants comprenant :
- au moins un corps de soupape (100, 100', 100"),
- au moins un élément à bride d'accouplement (200, 200') comportant une première bride d'accouplement (205), adaptée à se coupler avec un élément de remplissage du réservoir ou avec une bride d'un tuyau, et une deuxième bride d'accouplement (210) adaptée à se coupler avec le corps de soupape,
- au moins un élément de couvercle (315) pour obturer l'une quelconque des ouvertures (110a, 110b, 110c, 110d) prévues sur le corps de soupape,
- au moins un élément de protection contre la pluie (355) creux à l'intérieur et adapté à être monté sur ledit au moins un corps de soupape en correspondance avec une ouverture desdites au moins deux ouvertures,
- au moins un ensemble obturateur (350) pouvant se monter dans ledit au moins un corps de soupape ou dans l'élément de protection contre la pluie et adapté à fermer sélectivement une ouverture desdites au moins deux ouvertures du corps de soupape, l'ensemble obturateur comprenant un obturateur mobile (350a) adapté à fermer ladite ouverture.
